# EUROPEAN PATENT SPECIFICATION

(11) **EP 3 820 076 B1**
(45) Date of publication and mention of the grant of the patent: **24.04.2024**
(21) Application number: 19841875.8
(22) Date of filing: 22.07.2019
(51) Int. Cl.: H04B 10/70, H04L 9/08

(54) **QUANTUM KEY TRANSMISSION DEVICE AND SYSTEM**
QUANTENSCHLÜSSELÜBERTRAGUNGSVORRICHTUNG UND -SYSTEM
DISPOSITIF ET SYSTÈME DE TRANSMISSION DE CLÉ QUANTIQUE

(30) Priority: 23.07.2018 CN 201810813907
(43) Date of publication of application: 12.05.2021
(73) Proprietor: HUAWEI TECHNOLOGIES CO., LTD., Shenzhen, Guangdong 518129 (CN)
(72) Inventor: LI, Zhengyu, Shenzhen, Guangdong 518129 (CN); XIAO, Xinhua, Shenzhen, Guangdong 518129 (CN); WU, Yuping, Shenzhen, Guangdong 518129 (CN)
(74) Representative: Gill Jennings & Every LLP
(86) International application number: PCT/CN2019/097103
(87) International publication number: WO 2020/020100

(56) References cited:
- WO-A1-2017/148141
- CN-A- 105 337 730
- CN-A- 107 135 066
- CN-A- 107 666 353
- CN-A- 108 242 996
- "Quantum Key Distribution (QKD); Components and Internal Interfaces", ETSI GROUP REPORT, EUROPEAN TELECOMMUNICATIONS STANDARDS INSTITUTE (ETSI), 650, ROUTE DES LUCIOLES ; F-06921 SOPHIA-ANTIPOLIS ; FRANCE , vol. QKD, no. V2.1.1 16 March 2018 (2018-03-16), pages 1-47, XP014311194, Retrieved from the Internet: URL:http://www.etsi.org/deliver/etsi_gr/QK D/001_099/003/02.01.01_60/gr_QKD003v020101 p.pdf [retrieved on 2018-03-16]
- LIU CHANGJIANG ET AL: "Synchronization schemes for continuous-variable quantum key distribution", PROCEEDINGS OF SPIE; [PROCEEDINGS OF SPIE ISSN 0277-786X VOLUME 10524], SPIE, US, vol. 10244, 4 January 2016 (2016-01-04), pages 1024408-1024408, XP060080448, DOI: 10.1117/12.2264528 ISBN: 978-1-5106-1533-5
- INOUE, K. et al.: "Differential-phase-shift quantum key distribution using coherent ligh t", PHYSICAL REVIEW A, vol. 68, 27 August 2003 (2003-08-27), pages 22317-1-22317-4, XP002478398,

## Description

### TECHNICAL FIELD

This application relates to the field of quantum communications technologies, and in particular, to a quantum key transmission apparatus and system.

### BACKGROUND

Secure quantum communications is a new communications technology developed in recent 30 years. The secure quantum communications is a combination of quantum properties and conventional cryptography. In the secure quantum communications, communication security is ensured mainly based on basic principles and properties of quantum mechanics. Currently, a most practical technology in the secure quantum communications is quantum key transmission. In the quantum key transmission, a random key is carried in a quantum signal for transmission.

In the prior art, when the quantum key transmission is performed, a transmit end may generate a local oscillator signal and a quantum signal, and transmit the local oscillator signal and the quantum signal to a receive end through a same channel. Because light intensity of the local oscillator signal is far greater than light intensity of the quantum signal, the local oscillator signal easily causes crosstalk to the quantum signal. To reduce the crosstalk caused by the local oscillator signal to the quantum signal, the transmit end may usually isolate the local oscillator signal from the quantum signal through time division multiplexing and polarization multiplexing. The time division multiplexing means that a time point of sending the local oscillator signal is different from a time point of sending the quantum signal, and the polarization multiplexing means that polarization directions of the local oscillator signal and the quantum signal are orthogonal when the local oscillator signal and the quantum signal enter an optical fiber.

When the time division multiplexing is used to transmit the local oscillator signal and the quantum signal, after receiving the local oscillator signal and the quantum signal, the receive end needs to introduce an additional optical path difference to compensate for a latency between the quantum signal and the local oscillator signal. Consequently, the receive end cannot use an integrated optical chip, and cannot be miniaturized. However, when the polarization multiplexing is used to transmit the local oscillator signal and the quantum signal, a finite extinction ratio of a polarization multiplexer limits strength of the local oscillator signal, and consequently a signal-to-noise ratio of the receive end decreases.

The ETSI Group Report on Quantum Key Distribution (ETSI GR QKD 003 v2.1.1) discusses Components and Internal Interfaces, including continuous-variable QKD implementations. In a transmitted local oscillator scheme, the transmitter produces a local oscillator state and a signal state having a well-defined phase reference. Therefore, both pulses should originate from the same laser source. In a practical implementation, the laser pulse may be split by a highly unbalanced optical coupler with the two output ports corresponding to a high-intensity and a low intensity for the local oscillator channel and to the quantum signal channel, respectively. The quantum signal is modulated and multiplexed to the local oscillator before being sent into the transmission channel. To separate both channels without high losses, polarisation multiplexing can be used. At the sender, the signal and local oscillator is coupled to the two input ports of a polarising beamsplitter (PBS). In the output port, one polarisation corresponds to the signal and the other one to the local oscillator. Thus the two pulses propagate with orthogonal polarisation state in the transmission channel. At the receiver, the initial polarisation states of the pulses is recovered.

LID et al discuss "Synchronization Schemes for Continuous-Variable Quantum Key Distribution" in the journal Proceedings of SPIE, vol. 10244, pages 1024408-1 to 1024408-5. As discussed in that article, clock synchronization is crucial for a practical continuous-variable quantum key distribution system to precisely get the measurement result. Three different synchronization schemes for continuous-variable quantum key distribution system are presented to demonstrate the optimal scheme. The performance of synchronization scheme is evaluated by measuring the excess noise which is the critical parameter for the continuous-variable quantum key distribution system. The experiment results show that distilling the synchronization signal from the local oscillator has the simplest physical implemention and superior effect of synchronization, but a stronger local oscillator is required. Transmitting synchronization signal and quantum signal in the same fiber by wave-length division multiplex is also a fine way to provide stable clock when we take no account of the phsical device and wave-length source.

### SUMMARY

This application provides a quantum key transmission apparatus and system, to resolve a problem that a receive end cannot be miniaturized and a signal-to-noise ratio decreases when a quantum signal and a local oscillator signal are isolated from each other through time division multiplexing and polarization multiplexing. The technical solutions are as follows:

According to a first aspect, a quantum key sending apparatus is provided as set out in claim 1.

In this embodiment of this application, the quantum key sending apparatus may adjust a polarization direction of the quantum signal and a polarization direction of the reference signal by using a polarization controller, and send a local oscillator signal and an adjusted quantum signal to different optical fibers for transmission. In this way, the local oscillator signal and the quantum signal no longer need to be isolated from each other through time division multiplexing and polarization multiplexing. On this basis, in a quantum signal receiver at a receive end, no additional optical path difference needs to be introduced for latency compensation, and the receive end can be integrated and miniaturized. Moreover, the polarization multiplexing is no longer required in transmission of the local oscillator signal and the quantum signal. Therefore, strength of the local oscillator signal is not limited by a finite extinction ratio of a polarization multiplexer, and a received signal-to-noise ratio is improved. In addition, the isolation no longer needs to be performed through the time division multiplexing. Therefore, no resource in an optical fiber used to transmit the quantum signal needs to be allocated to transmit the local oscillator signal. In other words, all resources in the optical fiber may be used to transmit the quantum signal. This improves a transmission proportion of the quantum signal in a unit time.

In a possible implementation, light intensity of the second optical signal is greater than light intensity of the third optical signal.

In a possible implementation, the apparatus further includes a receiver and a processor, where
the receiver is configured to: receive polarization direction control information, and send the polarization direction control information to the processor;
the processor is configured to: process the polarization direction control information to obtain a first control signal, and send the first control signal to the polarization control module; and
the polarization control module is specifically configured to adjust the polarization direction of the first modulated signal and the polarization direction of the second modulated signal based on the first control signal.

The polarization direction control information may be angle information that is fed back by a receive end based on a detection result generated by detecting the reference signal and the local oscillator signal, and that is used to indicate a polarization angle that needs to be adjusted.

In a possible implementation, the quantum signal generation module includes a quantum random number generator, a processor, and a modulator; the quantum random number generator is configured to: generate a random number, and send the random number to the processor; the processor is configured to: generate the random key based on the random number, and generate a quantum control signal based on the random key; and is further configured to: generate a reference control signal based on the stored reference data, and send the quantum control signal and the reference control signal to the modulator; and the modulator is configured to: modulate the third optical signal based on the quantum control signal to obtain the first modulated signal, modulate the third optical signal based on the reference control signal to obtain the second modulated signal, and send the first modulated signal and the second modulated signal to the polarization control module.

In a possible implementation, the polarization control module includes a polarization controller and an attenuator; the polarization controller is configured to: adjust the polarization direction of the first modulated signal and the polarization direction of the second modulated signal, and send an adjusted first modulated signal and an adjusted second modulated signal to the attenuator; and the attenuator is configured to: attenuate the adjusted first modulated signal to obtain the quantum signal, and attenuate the adjusted second modulated signal to obtain the reference signal.

In a possible implementation, the polarization control module includes a polarization controller and an attenuator; the attenuator is configured to: attenuate the first modulated signal and the second modulated signal to obtain an attenuated first modulated signal and an attenuated second modulated signal, and send the attenuated first modulated signal and the attenuated second modulated signal to the polarization controller; and the polarization controller is configured to: adjust a polarization direction of the attenuated first modulated signal to obtain the quantum signal, and attenuate a polarization direction of the attenuated second modulated signal to obtain the reference signal.

In a possible implementation, a wavelength of the second optical signal is different from a wavelength of another optical signal transmitted over the first optical fiber, and a wavelength of the third optical signal is different from a wavelength of another optical signal transmitted over the second optical fiber.

In a possible implementation, the second optical fiber is further used to transmit a coherent optical signal, and a transmission direction of the coherent optical signal transmitted over the second optical fiber is opposite to a transmission direction of the quantum signal transmitted over the second optical fiber.

In this embodiment of this application, the polarization controller is disposed on a quantum signal transmission path of the quantum key sending apparatus, and adjusts a polarization direction of the quantum signal based on the polarization direction control information that is fed back by a quantum key receiving apparatus based on the detection result. In this way, the quantum signal and the local oscillator signal that are received by the quantum key receiving apparatus can have a same polarization direction or have a fixed polarization direction difference, or the received quantum signal can always be stabilized in one polarization direction. This can improve an effect of interference between the quantum signal and the local oscillator signal, and further ensure accuracy of a detection result. In addition, the generated quantum signal needs to pass through the polarization controller before being sent to the second optical fiber for transmission. The polarization controller itself attenuates the signal to some extent. Therefore, when attenuating a modulated third optical signal to obtain the quantum signal, the attenuator may correspondingly reduce attenuation strength of the signal. This reduces working load of the attenuator, and does not affect strength of the local oscillator signal.

According to a second aspect, a quantum key receiving apparatus is provided according to claim 9.

In this embodiment of this application, the quantum key receiving apparatus may receive the local oscillator signal and the quantum signal that are transmitted through two different optical fibers, and control the polarization direction of the local oscillator signal or the quantum signal by using the polarization control module disposed on a local-oscillator-signal transmission path or a quantum signal transmission path. In a transmission process, the local oscillator signal and the quantum signal are not isolated from each other through time division multiplexing and polarization multiplexing. Therefore, in the quantum key receiving apparatus, no additional optical path difference needs to be introduced for latency compensation, and the quantum key receiving apparatus can be integrated and miniaturized. Moreover, strength of the local oscillator signal is not limited by a finite extinction ratio of a polarization multiplexer, and a signal-to-noise ratio of a receive end is improved. In addition, the polarization control module adjusts the polarization direction of the local oscillator signal or the quantum signal. In this way, the local oscillator signal and the quantum signal can have a same polarization direction or have a fixed polarization direction difference, or the local oscillator signal can always be stabilized in one polarization direction. This can improve an effect of interference between the quantum signal and the local oscillator signal, and further ensure accuracy of a detection result.

According to a third aspect, a quantum key receiving apparatus is provided as set out in claim 10.

In this embodiment of this application, a polarization control module may not be disposed in the quantum key receiving apparatus. Instead, the first polarization beam splitter and the second polarization beam splitter are used to perform beam splitting on the local oscillator signal, the quantum signal, and the reference signal. Then, the first quantum heterodyne detector and the second quantum heterodyne detector are used to measure a regular component of the reference signal and a regular component of the quantum signal, further calculate the signal parameter based on the regular component of the reference signal, and finally process the regular component of the quantum signal based on the signal parameter to obtain the initial key, to eliminate impact caused by polarization rotation, and ensure accuracy of the obtained key information.

According to a fourth aspect, a quantum key transmission system is provided as set out in claim 11.

Technical effects achieved in the second aspect, the third aspect, and the fourth aspect are similar to those achieved by using corresponding technical means in the first aspect. Details are not described herein again.

The technical solutions provided in this application have at least the following beneficial effects:

In the embodiments of this application, the quantum key sending apparatus is provided, and may adjust the polarization direction of the quantum signal and the polarization direction of the reference signal by using the polarization controller, and send the local oscillator signal and the adjusted quantum signal to different optical fibers for transmission. In this way, the local oscillator signal and the quantum signal no longer need to be isolated from each other through time division multiplexing and polarization multiplexing. On this basis, in a quantum signal receiver at a receive end, no additional optical path difference needs to be introduced for latency compensation, and the receive end can be integrated and miniaturized. Moreover, the local oscillator signal and the quantum signal no longer need to be isolated from each other through the polarization multiplexing. Therefore, strength of the local oscillator signal is not limited by a finite extinction ratio of a polarization multiplexer, and a signal-to-noise ratio of the receive end is improved. In addition, the isolation no longer needs to be performed through the time division multiplexing. Therefore, no resource in an optical fiber used to transmit the quantum signal needs to be allocated to transmit the local oscillator signal. In other words, all resources in the optical fiber may be used to transmit the quantum signal. This improves a transmission proportion of the quantum signal in a unit time.

### BRIEF DESCRIPTION OF DRAWINGS

FIG. 1 is a schematic structural diagram of a quantum key sending apparatus according to an embodiment of this application;
FIG. 2 is a schematic structural diagram of a quantum key sending apparatus according to an embodiment of this application;
FIG. 3 is a schematic structural diagram of a quantum key sending apparatus according to an embodiment of this application;
FIG. 4 is a schematic structural diagram of a quantum key sending apparatus according to an embodiment of this application;
FIG. 5 is a schematic structural diagram of a quantum key sending apparatus according to an embodiment of this application;
FIG. 6 is a schematic structural diagram of a quantum key sending apparatus according to an embodiment of this application;
FIG. 7 is a schematic structural diagram of a quantum key sending apparatus according to an embodiment of this application;
FIG. 8 is a schematic structural diagram of a quantum key sending apparatus according to an embodiment of this application;
FIG. 9 is a schematic structural diagram of a quantum key receiving apparatus according to an embodiment of this application;
FIG. 10 is a schematic structural diagram of a quantum key receiving apparatus according to an embodiment of this application;
FIG. 11 is a schematic structural diagram of a quantum key receiving apparatus according to a background example falling outside the scope of the attached claims;
FIG. 12 is a schematic structural diagram of a quantum key receiving apparatus according to an embodiment of this application;
FIG. 13 is a schematic structural diagram of a quantum key receiving apparatus according to an embodiment of this application;
FIG. 14 is a schematic structural diagram of a quantum key transmission system according to an embodiment of this application; and
FIG. 15 is a schematic structural diagram of a quantum key transmission system according to an embodiment of this application.

### DESCRIPTION OF EMBODIMENTS

To make the objectives, technical solutions, and advantages of this application clearer, the following further describes the implementations of this application in detail with reference to the accompanying drawings.

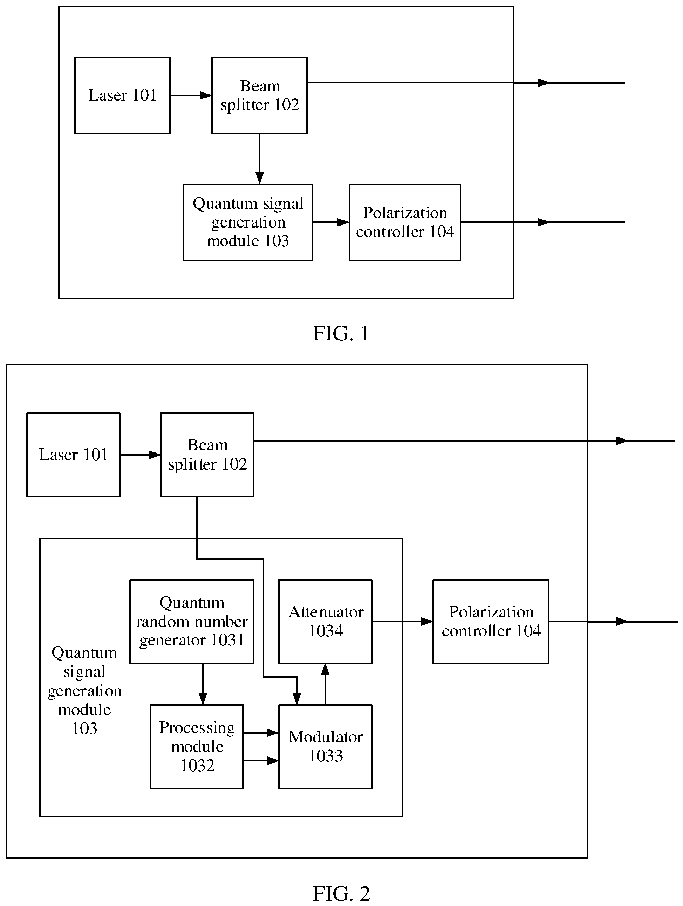

FIG. 1 is a schematic structural diagram of a quantum key sending apparatus according to an embodiment of this application. As shown in FIG. 1, the apparatus includes a laser 101, a beam splitter 102, a quantum signal generation module 103, and a polarization controller 104.

The laser 101 is configured to output a first optical signal. The beam splitter 102 is configured to: receive the first optical signal, split the first optical signal into a second optical signal and a third optical signal, send the second optical signal through a first optical fiber, and send the third optical signal to the quantum signal generation module 103. The quantum signal generation module 103 is configured to: modulate the third optical signal to obtain a quantum signal and a reference signal, and send the quantum signal and the reference signal to the polarization controller 104, where the quantum signal carries a to-be-transmitted random key. The polarization controller 104 is configured to: adjust a polarization direction of the quantum signal and a polarization direction of the reference signal, and send an adjusted quantum signal and an adjusted reference signal through a second optical fiber. Optionally, light intensity of the second optical signal is greater than light intensity of the third optical signal.

For example, the laser 101 may be a laser that can generate a narrow-linewidth linearly-polarized optical signal, may be a laser that emits a pulse laser signal having a stable phase relationship, or may be a laser that emits a continuous laser signal. The laser 101 includes an output port. The laser 101 may output the first optical signal through the output port. Optionally, when signals are subsequently transmitted through the first optical fiber and the second optical fiber, other optical signals may also be transmitted over the first optical fiber and the second optical fiber. For example, classical coherent optical signals may also be transmitted over the first optical fiber and the second optical fiber. On this basis, in this embodiment of this application, the laser 101 may output the first optical signal whose wavelength is different from wavelengths of the other optical signals transmitted over the first optical fiber and the second optical fiber.

The beam splitter 102 may include one input port and two output ports. The input port of the beam splitter 102 is connected to the output port of the laser 101. The beam splitter 102 may receive, through the included input port, the first optical signal sent by the laser 101, and split the first optical signal into the second optical signal and the third optical signal based on a beam splitting ratio of the beam splitter 102. Light intensity of a local oscillator signal is usually high. Therefore, after beam splitting, an optical signal with higher light intensity may be used as the second optical signal, and an optical signal with lower light intensity may be used as the third optical signal. The beam splitting ratio of the beam splitter 102 may be 10:90, 1:99, or the like.

After splitting the first optical signal into the second optical signal and the third optical signal, the beam splitter 102 may output the second optical signal through an included first output port, and output the third optical signal through an included second output port. It should be noted that the first output port of the beam splitter 102 may be directly connected to the first optical fiber, or the first output port of the beam splitter 102 may be connected to the first optical fiber by using a coupler. In this way, the second optical signal output from the first output port is sent as the local oscillator signal through the first optical fiber. The second output port of the beam splitter 102 may be connected to the quantum signal generation module 103. In this way, the beam splitter 102 may send the third optical signal to the quantum signal generation module 103 through the second output port.

The quantum signal generation module 103 may receive the third optical signal sent by the beam splitter 102, and modulate the third optical signal based on the random key and reference data, to obtain the quantum signal that carries the random key and the reference signal that carries the reference data.

For example, referring to FIG. 2, the quantum signal generation module 103 may include a quantum random number generator 1031, a processing module 1032, a modulator 1033, and an attenuator 1034. The quantum random number generator 1031 is configured to: generate a random number, and send the random number to the processing module 1032. After receiving the random number sent by the quantum random number generator 1031, the processing module 1032 may process the random number according to a protocol or a standard, to generate the random key, and generate, based on the random key, a control signal used to control the modulator 1033 to modulate the quantum signal. In addition, the processing module 1032 may further generate, based on the stored reference data, a control signal used to control the modulator 1033 modulate the reference signal. Then, the processing module 1032 may send the foregoing two control signals to the modulator 1033. The modulator 1033 may modulate the third optical signal based on the foregoing two control signals, to obtain the quantum signal and the reference signal, and enable the quantum signal and the reference signal to be located in different frequency bands. The modulator 1033 sends a modulated signal to the attenuator 1034. The attenuator 1034 attenuates strength of the modulated signal, to obtain the quantum signal that carries the random key and the reference signal that carries the reference data.

Optionally, in a possible implementation, the quantum signal generation module 103 may send the quantum signal and the reference signal in a time division manner. In other words, in a time period, the processing module 1032 in the quantum signal generation module 103 may generate, based on the random key, a quantum control signal used to control the modulator 1033, and then control, based on the quantum control signal, the modulator 1033 to perform modulation, to obtain the quantum signal. In another time period different from the time period, the processing module 1032 may generate, based on the reference data, a reference control signal used to control the modulator 1033, and then control, based on the reference control signal, the modulator 1033 to perform modulation, to obtain the reference signal.

Optionally, in addition to sending the quantum signal and the reference signal in a time division multiplexing or frequency division multiplexing manner, the quantum signal generation module 103 may also send the quantum signal and the reference signal in a polarization multiplexing manner. That is, when the quantum signal generation module 103 inputs the quantum signal and the reference signal to a channel, the polarization direction of the quantum signal may be orthogonal to the polarization direction of the reference signal. In this case, the modulator may be a dual polarization modulator, for example, a dual polarization-quadrature phase shift keying (Dual Polarization-Quadrature Phase Shift Keying, DP-QPSK) modulator.

The polarization controller 104 may include a first input port, a second input port, and an output port. The polarization controller 104 may receive, through the included first input port, the quantum signal and the reference signal that are sent by the quantum signal generation module 103, and receive a first control signal through the second input port. Then, the polarization controller 104 may adjust the polarization direction of the quantum signal and the polarization direction of the reference signal based on the first control signal, and output the adjusted quantum signal and the adjusted reference signal through the included output port. The output port of the polarization controller 104 may be directly connected to the second optical fiber, or may be connected to the second optical fiber by using a coupler. In this way, the adjusted quantum signal and the adjusted reference signal that are output from the output port of the polarization controller 104 may be sent through the second optical fiber.

It should be noted that the first control signal may be a control signal that is generated by a quantum key receiving apparatus based on a detection result obtained by detecting the reference signal and the local oscillator signal, and that is fed back by the quantum key receiving apparatus.

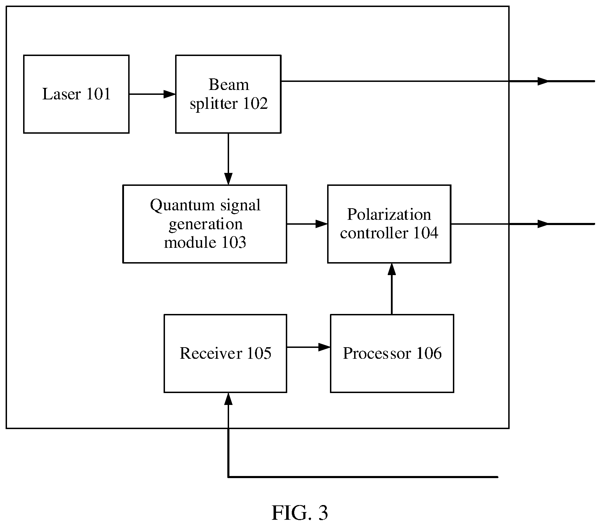

Optionally, in a possible implementation, the quantum key receiving apparatus may only generate polarization direction control information based on the detection result obtained by detecting the reference signal and the local oscillator signal, and feed back the polarization direction control information, and the quantum key sending apparatus processes the polarization direction control information to further obtain the first control signal. In this case, referring to FIG. 3, the quantum key sending apparatus may further include a receiver 105 and a processor 106. The receiver 105 is configured to: receive the polarization direction control information, and send the polarization direction control information to the processor 106. The processor 106 is configured to: receive the polarization direction control information, process the polarization direction control information to obtain the first control signal, and send the first control signal to the polarization controller 104. The polarization controller 104 is specifically configured to adjust the polarization direction of the quantum signal and the polarization direction of the reference signal based on the first control signal.

It should be noted that the receiver 105 may include an input port and an output port. The receiver 105 may receive, through the input port, the polarization direction control information fed back by the quantum key receiving apparatus. The polarization direction control information may be angle information used to indicate a polarization angle that needs to be adjusted. After receiving the polarization direction control information, the receiver 105 may output the polarization direction control information to the processor 106 through the output port.

The processor 106 may include an input port and an output port. The input port included in the processor 106 is connected to the output port of the receiver 105. In this way, the processor 106 may receive, through the included input port, the polarization direction control information sent by the receiver 105. The output port included in the processor 106 may be connected to the second input port of the polarization controller 104. In this way, after processing the polarization direction control information to obtain the first control signal, the processor 106 may send the first control signal to the polarization controller 104 through the included output port.

The quantum key receiving apparatus usually encodes the angle information of the polarization angle that needs to be adjusted, and then sends encoded angle information. Therefore, after the receiver 105 sends the received polarization direction control information to the processor 106, the processor 106 may decode the polarization direction control information according to a protocol or a standard negotiated with the quantum key receiving apparatus in advance, to obtain the polarization angle that needs to be adjusted. Then, the processor 106 may generate an analog signal based on the polarization angle, where the analog signal is the first control signal used to control the polarization controller 104 to adjust the polarization direction.

After receiving the first control signal through the second input port, the polarization controller 104 may adjust, based on the first control signal, the polarization directions of the quantum signal and the reference signal that are sent by the quantum signal generation module 103, to obtain the adjusted quantum signal and the adjusted reference signal.

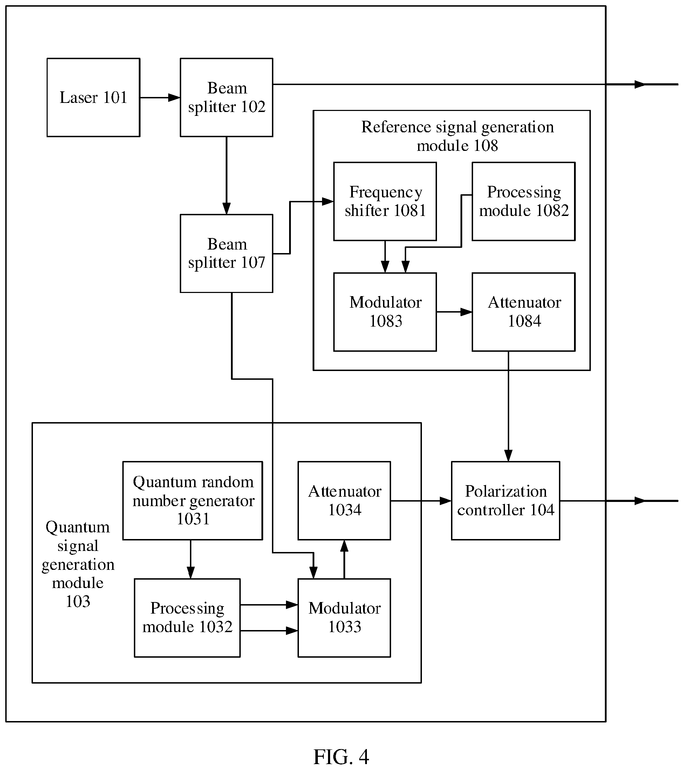

Optionally, in a possible implementation, referring to FIG. 4, the quantum key sending apparatus may further include a beam splitter 107 and a reference signal generation module 108, to increase light intensity of the reference signal, so that when phases and polarization of the two optical fibers change relatively quickly, a receive end can more accurately restore, based on the reference signal, key information carried in the quantum signal.

An input port of the beam splitter 107 is connected to the second output port of the beam splitter 102, a first output port of the beam splitter 107 is connected to the modulator 1033 included in the quantum signal generation module 103, and a second output port of the beam splitter 107 is connected to the reference signal generation module 108. In this way, the beam splitter 107 may receive, through the included input port, the third optical signal sent by the beam splitter 102 through the second output port. After receiving the third optical signal, the beam splitter 107 may split the third optical signal into two optical signals. The beam splitter 107 may send one of the two optical signals to the modulator 1033 through the included first output port, and send the other optical signal to the reference signal generation module through the second output port.

The modulator 1033 in the quantum signal generation module 103 may receive the optical signal sent by the beam splitter 107, and modulate the received optical signal based on the method described above, so that a first reference signal and the quantum signal are located in different frequency bands.

The reference signal generation module 108 may receive the other optical signal sent by the beam splitter 107, and modulate the received optical signal to obtain a second reference signal. The second reference signal is located in a frequency band different from the frequency bands in which the first reference signal and the quantum signal are located.

For example, the reference signal generation module 108 may include a frequency shifter 1081, a processing module 1082, a modulator 1083, and an attenuator 1084. The second output port of the beam splitter 107 is connected to an input port of the frequency shifter 1081. In this way, the frequency shifter 1081 may receive, through the included input port, the other optical signal sent by the beam splitter 107. After receiving the optical signal sent by the beam splitter 107, the frequency shifter 1081 may perform a small frequency shift on the received optical signal. Then, the frequency shifter 1081 may send a frequency-shifted optical signal to the modulator 1083.

The processing module 1082 may generate, based on the stored reference data, a control signal used to control the modulator 1083 to modulate the second reference signal. Then, the processing module 1082 may send the control signal to the modulator 1083 through an output port.

The modulator 1083 includes two input ports and one output port. A first input port of the modulator 1083 may be connected to an output port of the frequency shifter 1081. In this way, the modulator 1083 may receive, through the included first input port, the frequency-shifted optical signal sent by the frequency shifter 1081. A second input port of the modulator 1083 is connected to the output port of the processing module 1082. In this way, the modulator 1083 may receive, through the included second input port, the control signal that is used to modulate the second reference signal and that is sent by the processing module 1082. After receiving the control signal sent by the processing module 1082, the modulator 1083 may modulate, based on the control signal, the received frequency-shifted optical signal sent by the frequency shifter 1081, and send a modulated signal to the attenuator 1084 through the output port. The modulated signal and the first reference signal carry same reference data.

After receiving the modulated signal, the attenuator 1084 may attenuate the modulated signal to obtain the second reference signal, and send the second reference signal to the polarization controller 104.

The polarization controller 104 may receive the first reference signal, the quantum signal, and the second reference signal. The polarization controller 104 may further receive the first control signal, and adjust a polarization direction of the first reference signal, the polarization direction of the quantum signal, and a polarization direction of the second reference signal based on the first control signal. Then, the polarization controller may output a polarization direction-adjusted first reference signal, the polarization direction-adjusted quantum signal, and a polarization direction-adjusted second reference signal through the included output port and the second optical fiber.

In this embodiment of this application, light intensity of the quantum signal is very low. Therefore, it is difficult to implement high light intensity for the first reference signal generated together with the quantum signal. However, in this implementation, the reference signal generation module is disposed in the quantum key sending apparatus, and therefore the second reference signal may be generated by using the independent reference signal generation module. In this way, light intensity of the second reference signal may be separately controlled, to enable the light intensity of the second reference signal to be greater than the light intensity of the first reference signal. In this way, the first reference signal and the second reference signal are simultaneously sent to the receive end, and the receive end receives two reference signals. In other words, the light intensity of the reference signal is greatly increased. On this basis, the key information carried in the quantum signal can be more accurately restored based on the reference signal.

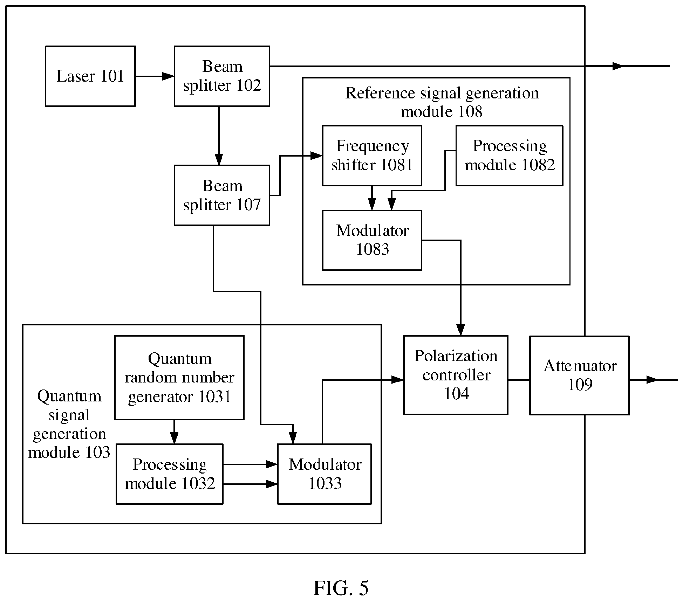

Optionally, the quantum signal generation module 103 may include a quantum random number generator 1031, a processing module 1032, and a modulator 1033; and the reference signal generation module 108 may include a frequency shifter 1081, a processing module 1082, and a modulator 1083. Functions of the foregoing components are the same as those described in the embodiment in FIG. 5, and details are not described herein again. Both an output end of the modulator 1033 and an output end of the modulator 1083 are connected to the polarization controller 104. After polarization adjustment, an adjusted signal is sent to an attenuator 109 to obtain an adjusted first reference signal, an adjusted second reference signal, and the adjusted quantum signal, and the adjusted first reference signal, second reference signal, and quantum signal are sent through the second optical fiber. Optionally, light intensity of a signal sent by the beam splitter 107 to the reference signal generation module 108 is greater than light intensity of a signal sent by the beam splitter 107 to the quantum signal generation module 103.

In this embodiment of this application, the quantum key sending apparatus may send the local oscillator signal through the first optical fiber, and send the adjusted quantum signal and the adjusted reference signal through the second optical fiber. The first optical fiber and the second optical fiber may be optical fibers that are specially disposed between the quantum key sending apparatus and the quantum key receiving apparatus and that are used for quantum communications. Optionally, in a possible implementation, considering a scenario in which two fibers are used to transmit coherent optical signals in a classical coherent communications system to implement bidirectional communication, in this embodiment of this application, a quantum communications system including the quantum key sending apparatus and the quantum key receiving apparatus may share the two optical fibers with the classical coherent communications system for signal transmission. In other words, the first optical fiber and the second optical fiber in this embodiment of this application may be not only used for quantum communications, but also used to transmit the coherent optical signals in the classical coherent communications system. On this basis, to distinguish between the second optical signal transmitted over the first optical fiber and another coherent optical signal transmitted over the first optical fiber, a wavelength of the second optical signal may be different from a wavelength of the another coherent optical signal in the first optical fiber. In addition, to distinguish between the quantum signal and the reference signal that are transmitted over the second optical fiber and another coherent optical signal transmitted over the second optical fiber, a wavelength of the third optical signal used to generate the quantum signal and the reference signal may also be different from a wavelength of the another coherent optical signal transmitted over the second optical fiber. Optionally, a transmission direction of the coherent optical signal transmitted over the second optical fiber is opposite to a transmission direction of the quantum signal transmitted over the second optical fiber.

In this embodiment of this application, the quantum key sending apparatus may adjust the polarization direction of the quantum signal and the polarization direction of the reference signal by using the polarization controller, and send the local oscillator signal and the adjusted quantum signal to different optical fibers for transmission. In this way, the local oscillator signal and the quantum signal no longer need to be isolated from each other through time division multiplexing and polarization multiplexing. On this basis, in the quantum key receiving apparatus serving as the receive end, no additional optical path difference needs to be introduced for latency compensation, and the receive end can be integrated and miniaturized. Moreover, strength of the local oscillator signal is not limited by a finite extinction ratio of a polarization multiplexer, and a received signal-to-noise ratio is improved. In addition, the isolation no longer needs to be performed through the time division multiplexing. Therefore, no resource in an optical fiber used to transmit the quantum signal needs to be allocated to transmit the local oscillator signal. In other words, all resources in the optical fiber may be used to transmit the quantum signal. This improves a transmission proportion of the quantum signal in a unit time.

In addition, when the local oscillator signal and the quantum signal are respectively transmitted through two optical fibers, polarization rotation of the local oscillator signal is different from polarization rotation of the quantum signal in a transmission process. Therefore, to ensure that the quantum key receiving apparatus can obtain a more accurate detection result after receiving the local oscillator signal and the quantum signal, the polarization controller 104 may be disposed in the quantum key sending apparatus. The polarization controller 104 adjusts the polarization direction of the quantum signal based on the polarization direction control information that is fed back by the quantum key receiving apparatus based on the detection result. In this way, the quantum signal and the local oscillator signal that are received by the quantum key receiving apparatus can have a same polarization direction or have a fixed polarization direction difference, or the received quantum signal can always be stabilized in one polarization direction. This can improve an effect of interference between the quantum signal and the local oscillator signal, and further ensure accuracy of the detection result.

It should be further noted that, in this embodiment of this application, the polarization controller is disposed on a quantum signal transmission path. The generated quantum signal needs to pass through the polarization controller before being sent to the second optical fiber for transmission. The polarization controller itself attenuates the signal to some extent. Therefore, when attenuating the modulated third optical signal to obtain the quantum signal, the attenuator may correspondingly reduce attenuation strength of the signal. This reduces working load of the attenuator.

In the foregoing embodiment, the polarization controller is disposed after the quantum signal generation module. Optionally, the polarization controller may alternatively be disposed inside the quantum signal generation module.

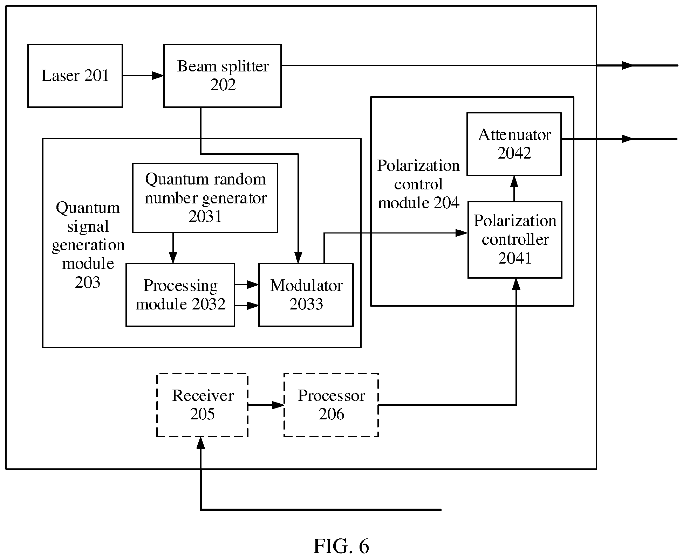

Referring to FIG. 6, another quantum key sending apparatus is provided. As shown in FIG. 6, the apparatus includes a laser 201, a beam splitter 202, a quantum signal generation module 203, and a polarization control module 204. The quantum signal generation module 203 includes a quantum random number generator 2031, a processing module 2032, and a modulator 2033. The polarization control module 204 includes a polarization controller 2041 and an attenuator 2042.

For a function of the laser 201, refer to the explanation and description of the laser 101 in the foregoing embodiment. For a function of the beam splitter 202, refer to the explanation and description of the beam splitter 102 in the foregoing embodiment. Details are not described herein again in this embodiment of this application.

It should be noted that the quantum random number generator 2031 included in the quantum signal generation module 203 is configured to: generate a random number, and send the random number to the processing module 2032.

After receiving the random number sent by the quantum random number generator 2031, the processing module 2032 may process the random number according to a protocol or a standard, to generate a random key, and generate, based on the random key, a control signal used to control the modulator 2033 to modulate a quantum signal. In addition, the processing module 2032 may further generate, based on stored reference data, a control signal used to control the modulator 2033 to modulate a reference signal. Then, the processing module 2032 may send the foregoing two control signals to the modulator 2033.

The modulator 2033 may receive the control signals sent by the processing module 2032, receive a third optical signal sent by the beam splitter 202, module the third optical signal based on the control signals, to obtain the quantum signal and the reference signal, and enable the quantum signal and the reference signal to be located in different frequency bands. The modulator 2033 sends a modulated signal to the polarization controller 2041.

The polarization controller 2041 may be configured to: receive a first control signal and the modulated signal that is sent by the modulator 2033, adjust a polarization direction of the modulated signal based on the first control signal, and send a polarization direction-adjusted signal to the attenuator 2042. The first control signal may be a control signal that is generated by a quantum key receiving apparatus based on a detection result obtained by detecting the reference signal and a local oscillator signal, and that is fed back by the quantum key receiving apparatus.

The attenuator 2042 is configured to: attenuate strength of the polarization direction-adjusted signal, to obtain the quantum signal that carries the random key and the reference signal that carries the reference data, and send the quantum signal and the reference signal through a second optical fiber.

Optionally, the quantum key sending apparatus may further include a receiver 205 and a processor 206. For functions of the receiver 205 and the processor 206, refer to functions of the receiver 105 and the processor 106 in the foregoing embodiment. Details are not described herein again in this embodiment of this application.

In this embodiment of this application, the polarization controller is disposed between the modulator and the attenuator, that is, the polarization controller may be disposed on a quantum signal transmission path. Because the polarization controller itself attenuates a signal to some extent, the polarization controller is disposed before the attenuator. Therefore, strength of a signal whose polarization direction is adjusted by the polarization controller is reduced. In this way, the attenuator may appropriately reduce attenuation strength when attenuating the polarization direction-adjusted signal. This reduces working load of the attenuator.

In this embodiment, the polarization controller is disposed on the quantum signal transmission path, and is configured to adjust a polarization direction of the quantum signal and a polarization direction of the reference signal. Optionally, in a possible implementation, the polarization controller may alternatively be disposed on a local-oscillator-signal transmission path, that is, is configured to adjust a polarization direction of the local oscillator signal. The following describes in detail an implementation in which the polarization controller is disposed on the local-oscillator-signal transmission path.

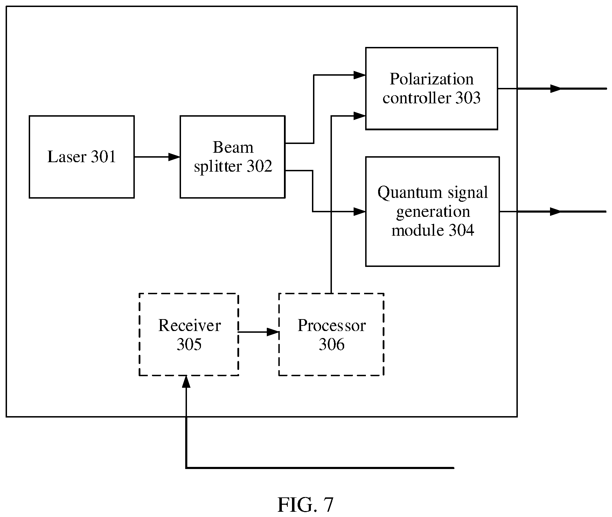

Referring to FIG. 7, a quantum key sending apparatus is provided. The apparatus includes a laser 301, a beam splitter 302, a polarization controller 303, and a quantum signal generation module 304.

The laser 301 is configured to output a first optical signal. The beam splitter 302 is configured to: receive the first optical signal, split the first optical signal into a second optical signal and a third optical signal, send the second optical signal to the polarization controller 303, and send the third optical signal to the quantum signal generation module 304, where light intensity of the second optical signal is greater than light intensity of the third optical signal. The polarization controller 303 is configured to: adjust a polarization direction of the second optical signal, and send an adjusted second optical signal through a first optical fiber. The quantum signal generation module 304 is configured to: modulate the third optical signal to obtain a quantum signal and a reference signal, and send the quantum signal and the reference signal through a second optical fiber.

For a function of the laser 301, refer to the explanation and description of the laser 101 in the foregoing embodiment. Details are not described herein again in this embodiment of this application.

The beam splitter 302 may include one input port and two output ports. The input port of the beam splitter 302 is connected to an output port of the laser 301. The beam splitter 302 may receive, through the included input port, the first optical signal sent by the laser 301, and split the first optical signal into the second optical signal and the third optical signal based on a beam splitting ratio of the beam splitter 302. Light intensity of a local oscillator signal is usually high. Therefore, after beam splitting, an optical signal with higher light intensity may be used as the second optical signal, and an optical signal with lower light intensity may be used as the third optical signal. The beam splitting ratio of the beam splitter 302 may be 10:90, 1:99, or the like.

After splitting the first optical signal into the second optical signal and the third optical signal, the beam splitter 302 may output the second optical signal through an included first output port, and output the third optical signal through an included second output port. It should be noted that the first output port of the beam splitter 302 is connected to a first input port of the polarization controller 303. In this way, the second optical signal may be sent to the polarization controller 303 through the first output port of the beam splitter. The second output port of the beam splitter 302 may be connected to the quantum signal generation module 304. In this way, the beam splitter 302 may send the third optical signal to the quantum signal generation module 304 through the second output port.

The polarization controller 303 may include the first input port, a second input port, and an output port. The polarization controller 303 may receive, through the included first input port, the second optical signal sent by the beam splitter 302, and receive a first control signal through the second input port. Then, the polarization controller 303 may adjust the polarization direction of the second optical signal based on the first control signal, and output the adjusted second optical signal through the included output port. The output port of the polarization controller 303 may be directly connected to the first optical fiber, or may be connected to the first optical fiber by using a coupler or a circulator. In this way, the polarization controller 303 may send the adjusted second optical signal as the local oscillator signal through the first optical fiber.

It should be noted that the first control signal may be a control signal that is generated by a quantum key receiving apparatus based on a detection result obtained by detecting the reference signal and the local oscillator signal, and that is fed back by the quantum key receiving apparatus.

Optionally, in a possible implementation, the quantum key sending apparatus may further include a receiver 305 and a processor 306. In this case, the quantum key receiving apparatus may generate polarization direction control information based on the detection result obtained by detecting the reference signal and the local oscillator signal, and feed back the polarization direction control information. The quantum key sending apparatus may receive the polarization direction control information by using the receiver 305, and the processor 306 processes the polarization direction control information to obtain the first control signal.

It should be noted that, for functions of the receiver 305 and the processor 306, refer to functions of the receiver 105 and the processor 106 in the foregoing embodiment. Details are not described herein again in this embodiment of this application.

For an implementation of the quantum signal generation module 304, refer to a related implementation of the quantum signal generation module 103 shown in FIG. 4 in the foregoing embodiment, or refer to a related implementation of the quantum signal generation module 203 shown in FIG. 6 in the foregoing embodiment. Details are not described herein again in this embodiment of this application.

It should be noted that an output port of the quantum signal generation module 304 may be directly connected to the second optical fiber, or may be connected to the second optical fiber by using a coupler or a circulator. In this way, after generating the quantum signal and the reference signal, the quantum signal generation module 304 may send the quantum signal and the reference signal through the second optical fiber.

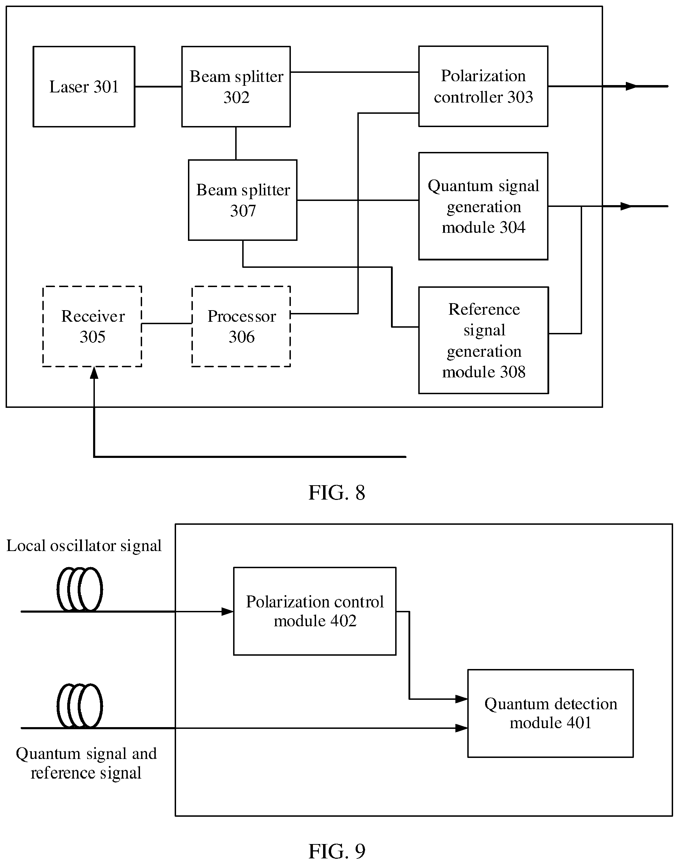

Optionally, as shown in FIG. 8, the quantum key sending apparatus further includes a beam splitter 307 and a reference signal generation module 308. The beam splitter 307 is configured to: split the third optical signal into two optical signals, and send one optical signal to the quantum signal generation module 304 and the other optical signal to the reference signal generation module 308. For the reference signal generation module, refer to a related implementation of the reference signal generation module 108 shown in FIG. 5 in the foregoing embodiment. This is not limited in this application.

In this embodiment of this application, the quantum key sending apparatus may adjust a polarization direction of the local oscillator signal by using the polarization controller, and send the quantum signal and an adjusted local oscillator signal to different optical fibers for transmission. In this way, the local oscillator signal and the quantum signal no longer need to be isolated from each other through time division multiplexing and polarization multiplexing. On this basis, in the quantum key receiving apparatus, no additional optical path difference needs to be introduced for latency compensation, and a receive end can be integrated and miniaturized. Moreover, the isolation no longer needs to be performed through the time division multiplexing. Therefore, strength of the local oscillator signal is not limited by a finite extinction ratio of a polarization multiplexer, and a received signal-to-noise ratio is improved. In addition, the isolation no longer needs to be performed through the time division multiplexing. Therefore, no resource in an optical fiber used to transmit the quantum signal needs to be allocated to transmit the local oscillator signal. In other words, all resources in the optical fiber may be used to transmit the quantum signal. This improves a transmission proportion of the quantum signal in a unit time.

In addition, when the local oscillator signal and the quantum signal are respectively transmitted through two optical fibers, polarization rotation of the local oscillator signal is different from polarization rotation of the quantum signal in a transmission process. Therefore, to ensure that the quantum key receiving apparatus can obtain a more accurate detection result after receiving the local oscillator signal and the quantum signal, the polarization controller may be disposed in the quantum key sending apparatus. The polarization controller adjusts the polarization direction of the local oscillator signal based on the polarization direction control information that is fed back by the quantum key receiving apparatus based on the detection result. In this way, the local oscillator signal and the quantum signal that are received by the quantum key receiving apparatus can have a same polarization direction or have a fixed polarization direction difference, or the received local oscillator signal can always be stabilized in one polarization direction. This can improve an effect of interference between the quantum signal and the local oscillator signal, and further ensure accuracy of the detection result.

In the foregoing embodiments, the quantum key sending apparatus provided in the embodiments of this application is mainly described. The quantum key sending apparatus may not only send the local oscillator signal and the quantum signal to different optical fibers for transmission, but also adjust the polarization direction of the quantum signal or the local oscillator signal. In this way, after different polarization rotation occurs, the local oscillator signal and the quantum signal that are received by the quantum key receiving apparatus serving as the receive end can have a same polarization direction or have a fixed polarization direction difference, or the local oscillator signal or the quantum signal that is received by the quantum key receiving apparatus can always be stabilized in one polarization direction. This ensures accuracy of the detection result. Optionally, in a possible implementation, the quantum key sending apparatus may not include the polarization controller. That is, the quantum key sending apparatus may be only responsible for sending the local oscillator signal and the quantum signal to different optical fibers for transmission, and the quantum key receiving apparatus adjusts the polarization direction of the received local oscillator signal or quantum signal, to ensure that after different polarization rotation occurs, the local oscillator signal and the quantum signal can have a same polarization direction or have a fixed polarization direction difference.

Based on the foregoing description, referring to FIG. 9, an embodiment of this application provides a quantum key receiving apparatus. The apparatus includes a quantum detection module 401 and a polarization control module 402.

The polarization control module 402 is configured to: receive a local oscillator signal from a first optical fiber, adjust a polarization direction of the local oscillator signal, and send an adjusted local oscillator signal to the quantum detection module 401. The quantum detection module 401 is configured to: receive a quantum signal and a reference signal from a second optical fiber, and detect the adjusted local oscillator signal, the quantum signal, and the reference signal to obtain detection results, where the quantum signal carries a random key, and the detection results include key information of the random key.

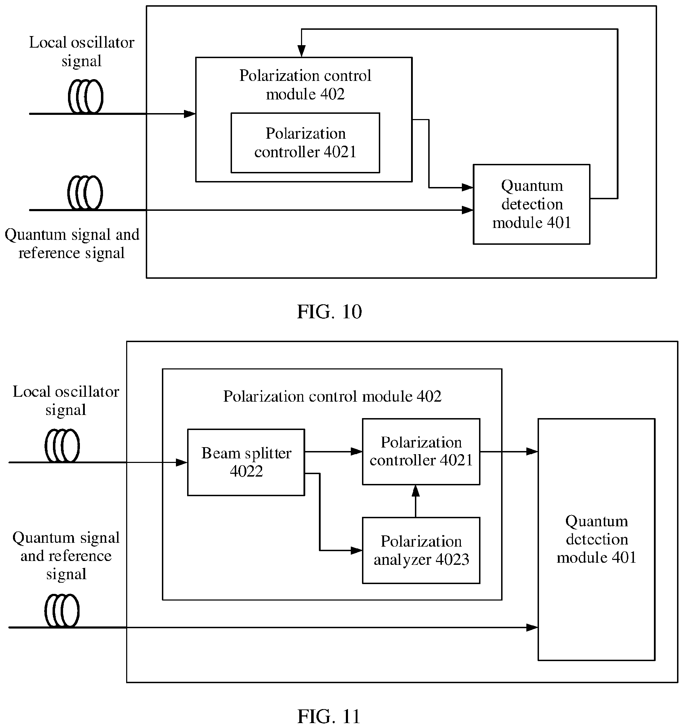

For example, in a possible implementation, referring to FIG. 10, the polarization control module 402 may include a polarization controller 4021. In this case, the polarization controller 4021 may include a first input port, a second input port, and an output port. The first input port of the polarization controller 4021 may be directly connected to the first optical fiber, or the first input port of the polarization controller 4021 may be connected to the first optical fiber by using a coupler or a circulator. The polarization controller 4021 may receive, through the first input port, the local oscillator signal sent by a quantum key sending apparatus through the first optical fiber. The polarization controller 4021 may receive, through the second input port, a second control signal that is generated by the quantum detection module 401 before a current time point based on a result of detecting the local oscillator signal and the reference signal. Then, the polarization controller may adjust the polarization direction of the local oscillator signal to a first polarization direction based on the second control signal, and send the adjusted local oscillator signal to the quantum detection module, where the first polarization direction may be the same as a polarization direction of the quantum signal, or there may be a fixed direction difference between the first polarization direction and a polarization direction of the quantum signal.

The reference signal carries reference data, and the reference data is negotiated by the quantum key sending apparatus and the quantum key receiving apparatus in advance. In addition, a polarization direction of the reference signal is the same as the polarization direction of the quantum signal. In addition, it should be noted that, if the polarization controller 4021 receives the local oscillator signal for the first time, the polarization controller 4021 adjusts the local oscillator signal to a preset polarization direction, and sends the adjusted local oscillator signal to the quantum detection module 401. In other words, if the local oscillator signal is received for the first time, during the first adjustment, the adjusting the polarization direction of the local oscillator signal to a first polarization direction is adjusting the local oscillator signal to the preset polarization direction.

The quantum detection module 401 may include a first input port, a second input port, and an output port. The quantum detection module 401 may receive, through the included first input port, the quantum signal and the reference signal that are sent by the quantum key sending apparatus through the second optical fiber. The quantum detection module 401 may receive the adjusted local oscillator signal through the included second input port. If the quantum signal and the reference signal are sent in a frequency division multiplexing manner, when receiving the quantum signal and the reference signal, the quantum detection module 401 may extract the reference signal from a frequency band in which the reference signal is located, and detect an interference signal between the reference signal and the adjusted local oscillator signal, to obtain a reference data measurement value. If a deviation between the reference data measurement value and the stored reference data is not greater than an allowable deviation, it indicates that an effect of interference between the reference signal and the adjusted local oscillator signal is relatively good, that is, the polarization direction of the adjusted local oscillator signal is appropriate. The polarization direction of the reference signal is the same as the polarization direction of the quantum signal. Therefore, an effect of interference between the adjusted local oscillator signal and the quantum signal is also relatively good. On this basis, the quantum detection module 401 may measure an interference signal between the quantum signal and the adjusted local oscillator signal, to obtain a detection result, and further obtain the key information of the random key based on the detection result.

Certainly, if a deviation between the reference data measurement value and the stored reference data is greater than an allowable deviation, it indicates that an effect of interference between the reference signal and the adjusted local oscillator signal is relatively poor. In this case, the polarization direction of the local oscillator signal needs to be continuously adjusted. Therefore, the quantum detection module 401 may generate the second control signal based on the difference between the reference data measurement value and the reference data, and output the second control signal to the polarization controller 4021 through the output port.

Optionally, if the reference signal and the quantum signal are sent in a time division multiplexing manner, when receiving the reference signal, the quantum detection module 401 may continuously adjust the direction of the local oscillator signal to determine a polarization direction that is of the local oscillator signal and that is obtained when an effect of interference between the reference signal and the local oscillator signal is the best. When the quantum signal is received, the local oscillator signal is adjusted based on the finally determined polarization direction of the local oscillator signal, to improve an effect of interference between the adjusted local oscillator signal and the quantum signal, and further ensure accuracy of a detection result.

The quantum detection module 401 may be a quantum detector for detecting a signal in a single polarization direction, or may be a quantum detector for detecting signals in orthogonal polarization directions. This is not limited in this application.

The polarization controller 4021 may further include the second input port. The second input port is connected to the output port of the quantum detection module 401, and is used to receive the second control signal sent by the quantum detection module 401. The polarization controller 4021 adjusts, based on the second control signal, a polarization direction of a currently received local oscillator signal; re-sends an adjusted local oscillator signal to the quantum detection module; and when a difference between a reference data measurement value detected by the quantum detection module 401 and the reference data is not greater than the allowable deviation, adjusts a polarization direction of a subsequently received local oscillator signal based a polarization direction of a finally adjusted local oscillator signal.

In a background example, referring to FIG. 11, the polarization control module 402 may include a polarization controller 4021, a beam splitter 4022, and a polarization analyzer 4023.

The beam splitter 4022 is configured to: receive the local oscillator signal from the first optical fiber, split the local oscillator signal into a fourth optical signal and a fifth optical signal, send the fourth optical signal to the polarization analyzer 4023, and send the fifth optical signal to the polarization controller 4021, where light intensity of the fourth optical signal is less than light intensity of the fifth optical signal. The polarization analyzer 4023 is configured to: receive the fourth optical signal, analyze a polarization direction of the fourth optical signal, generate a third control signal based on the polarization direction of the fourth optical signal and a target polarization direction, and send the third control signal to the polarization controller 4021. The polarization controller 4021 is configured to: receive the fifth optical signal and the third control signal, adjust a polarization direction of the fifth optical signal to the target polarization direction based on the third control signal, and send an adjusted fifth optical signal to the quantum detection module 401. The quantum detection module 401 is specifically configured to: receive the adjusted fifth optical signal, receive the quantum signal and the reference signal from the second optical fiber, and detect the adjusted fifth optical signal, the quantum signal, and the reference signal, to obtain the detection results.

It should be noted that, in this implementation, the beam splitter 4022 includes an input port, a first output port, and a second output port. The input port of the beam splitter 4022 may be directly connected to the first optical fiber, or may be connected to the first optical fiber by using a coupler or a circulator. In this way, the beam splitter 4022 may receive, through the included input port, the local oscillator signal sent by a quantum key sending apparatus through the first optical fiber. Then, the beam splitter 4022 may split the received local oscillator signal into the fourth optical signal and the fifth optical signal based on a specific beam splitting ratio. The fourth optical signal is used to analyze a polarization direction and may have relatively low light intensity. The fifth optical signal is used as the local oscillator signal to interfere with the quantum signal and the reference signal. Therefore, specific light intensity needs to be ensured for the fifth optical signal. On this basis, when beam splitting is performed by the beam splitter 4022, light intensity of the fourth optical signal may be relatively low. For example, the beam splitting ratio may be 1:99. When the beam splitting is performed based on the beam splitting ratio, the fourth optical signal that accounts for 1% of the local oscillator signal and the fifth optical signal that accounts for 99% of the local oscillator signal are obtained.

After obtaining the fourth optical signal and the fifth optical signal, the beam splitter 4022 may send the fourth optical signal to the polarization analyzer 4023 through the first output port, and send the fifth optical signal to the polarization controller 4021 through the second output port.

The polarization analyzer 4023 may include an input port and an output port. The input port is connected to the first output port of the beam splitter 4022. In this way, the polarization analyzer 4023 may receive the fourth optical signal through the input port. After receiving the fourth optical signal, the polarization analyzer may analyze the polarization direction of the fourth optical signal, compare the target polarization direction with the polarization direction that is of the fourth optical signal and that is obtained through analysis, and generate the third control signal based on a difference between the polarization direction of the fourth optical signal and the target polarization direction. The third control signal is output through the included output port.

The polarization controller 4021 includes a first input port, a second input port, and an output port. The first input port is connected to the second output port of the beam splitter 4022. In this way, the polarization controller 4021 may receive the fifth optical signal output by the beam splitter 4022. The second input port is connected to the output port of the polarization analyzer 4023. In this way, the polarization controller 4021 may receive the third control signal output by the polarization analyzer 4023. The polarization controller 4021 may adjust the polarization direction of the fifth optical signal to the target polarization direction based on the received third control signal, and send the adjusted fifth optical signal to the quantum detection module 401 through the output port.

It should be noted that a direction deviation between the target polarization direction and a polarization direction of the quantum signal is not greater than a preset value. When the direction deviation is 0, it indicates that the polarization direction of the quantum signal is the same as the polarization direction of the local oscillator signal. In this case, an effect of interference between the quantum signal and the local oscillator signal is the best. Certainly, if the direction deviation is greater than 0, as the direction deviation increases, an effect of interference between the local oscillator signal and the quantum signal gradually deteriorates. Therefore, the preset value may be minimized as much as possible. For example, the preset value may be 5°, 8°, or 10°.

The quantum detection module 401 may receive the adjusted fifth optical signal sent by the polarization controller 4021, and detect an interference signal between the adjusted fifth optical signal and the quantum signal, to obtain a detection result including the key information of the random key.

Optionally, power of the local oscillator signal is attenuated in a transmission process. Therefore, to ensure the effect of interference between the local oscillator signal and the quantum signal, the power of the local oscillator signal needs to reach a specific value. On this basis, an optical amplifier may be further disposed in the quantum key receiving apparatus. The optical amplifier may be disposed before the polarization control module, or may be disposed between the polarization control module and the quantum detection module. In other words, the quantum key receiving apparatus may receive and amplify, by using the optical amplifier, the local oscillator signal transmitted over the first optical fiber, and then output an amplified local oscillator signal to the polarization control module to adjust the polarization direction. Alternatively, the quantum key receiving apparatus may adjust, by using the polarization control module, the polarization direction of the local oscillator signal, input the adjusted local oscillator signal into the optical amplifier for power amplification, and then output an amplified local oscillator signal to the quantum detection module.

The quantum key receiving apparatus may receive the local oscillator signal and the quantum signal that are transmitted through two different optical fibers, and obtain the detection result based on the received local oscillator signal and the received quantum signal. In a transmission process, the quantum signal and the local oscillator signal do not need to be isolated from each other through time division multiplexing and polarization multiplexing. Therefore, in the quantum key receiving apparatus, no additional optical path difference needs to be introduced for latency compensation, and the quantum key receiving apparatus can be integrated and miniaturized. Moreover, the local oscillator signal and the quantum signal no longer need to be isolated from each other through the polarization multiplexing. Therefore, strength of the local oscillator signal is not limited by a finite extinction ratio of a polarization multiplexer, and a signal-to-noise ratio of a receive end is improved.

In addition, polarization rotation of the local oscillator signal is different from polarization rotation of the quantum signal when they are transmitted in the two optical fibers. Therefore, in the quantum key receiving apparatus, the polarization control module may be disposed on a local-oscillator-signal transmission path to adjust the polarization direction of the local oscillator signal. In this way, the adjusted local oscillator signal and the quantum signal can have a same polarization direction or have a fixed polarization direction difference, or the adjusted local oscillator signal can always be stabilized in one polarization direction. This can improve the effect of interference between the quantum signal and the local oscillator signal, and further ensure accuracy of the detection result.

In the quantum key receiving apparatuses provided in FIG. 9 to FIG. 11, the polarization control module is disposed on the local-oscillator-signal transmission path to adjust the polarization direction of the local oscillator signal. Optionally, in a possible implementation, the polarization control module may alternatively be disposed on a quantum signal transmission path of the quantum key receiving apparatus, and the polarization direction of the quantum signal is adjusted, to ensure that a direction deviation between the polarization direction of the quantum signal and the polarization direction of the local oscillator signal is not greater than a preset value.

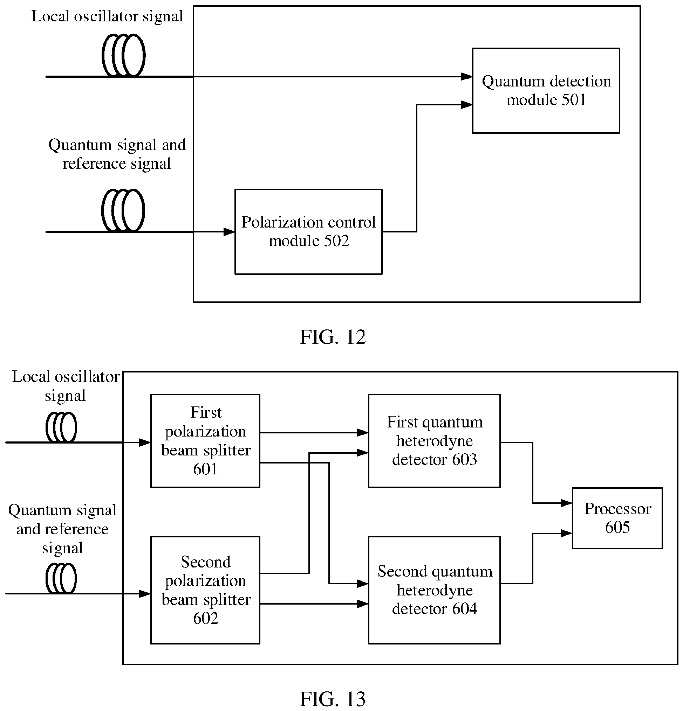

For example, referring to FIG. 12, a quantum key receiving apparatus is provided. The apparatus includes a quantum detection module 501 and a polarization control module 502.

The polarization control module 502 is configured to: receive a quantum signal and a reference signal from a second optical fiber, adjust a polarization direction of the quantum signal and a polarization direction of the reference signal, and send an adjusted quantum signal and an adjusted reference signal to the quantum detection module 501. The quantum detection module 501 is configured to: receive a local oscillator signal from a first optical fiber, and detect the local oscillator signal, the adjusted quantum signal, and the adjusted reference signal, to obtain detection results.

It should be noted that the polarization control module 502 may be a polarization controller. The polarization control module 502 may include a first input port, a second input port, and an output port. The first input port of the polarization control module 502 may be directly connected to the second optical fiber, or the first input port of the polarization control module 502 may be connected to the second optical fiber by using a coupler or a circulator. The polarization control module 502 may receive, through the first input port, the quantum signal and the reference signal that are sent by a quantum key sending apparatus through the second optical fiber. The polarization control module 502 may receive, through the second input port, a fourth control signal that is generated by the quantum detection module 501 before a current time point based on a result of detecting the local oscillator signal and the reference signal. Then, the polarization control module 502 may adjust the polarization direction of the quantum signal and the polarization direction of the reference signal to a first polarization direction based on the fourth control signal, and send the adjusted quantum signal and the adjusted reference signal to the quantum detection module 501.

The reference signal carries reference data, and the reference data is negotiated by the quantum key sending apparatus and the quantum key receiving apparatus in advance. In addition, the polarization direction of the reference signal is the same as the polarization direction of the quantum signal. In addition, it should be noted that, if the polarization control module 502 receives the quantum signal and the reference signal for the first time, the polarization control module 502 adjusts the quantum signal and the reference signal to a preset polarization direction, and sends the adjusted the quantum signal and the adjusted reference signal to the quantum detection module 501. In other words, if the quantum signal and the reference signal are received for the first time, during the first adjustment, the adjusting the polarization direction of the quantum signal and the polarization direction of the reference signal to a first polarization direction is adjusting the quantum signal and the reference signal to the preset polarization direction.

The quantum detection module 501 may include a first input port, a second input port, and an output port. The quantum detection module 501 may receive, through the included first input port, the local oscillator signal sent by the quantum key sending apparatus through the first optical fiber. The quantum detection module 501 may receive, through the included second input port, the adjusted quantum signal and the adjusted reference signal that are sent by the polarization control module 502. If the quantum signal and the reference signal are sent in a frequency division multiplexing manner, when receiving the adjusted quantum signal and the adjusted reference signal, the quantum detection module 501 may extract the adjusted reference signal from a frequency band in which the reference signal is located, and detect an interference signal between the adjusted reference signal and the local oscillator signal, to obtain a reference data measurement value. If a deviation between the reference data measurement value and the stored reference data is not greater than an allowable deviation, it indicates that an effect of interference between the adjusted reference signal and the local oscillator signal is relatively good, that is, the polarization direction of the adjusted reference signal is appropriate. The polarization direction of the adjusted reference signal is the same as the polarization direction of the adjusted quantum signal. Therefore, an effect of interference between the local oscillator signal and the adjusted quantum signal is also relatively good. On this basis, the quantum detection module 501 may measure an interference signal between the adjusted quantum signal and the local oscillator signal, to obtain a detection result, and further obtain key information of a random key based on the detection result.

Certainly, if a deviation between the reference data measurement value and the stored reference data is greater than an allowable deviation, it indicates that an effect of interference between the adjusted reference signal and the local oscillator signal is relatively poor. In this case, the polarization direction of the quantum signal needs to be continuously adjusted. Therefore, the quantum detection module 501 may generate the fourth control signal based on the difference between the reference data measurement value and the reference data, and output the fourth control signal to the polarization control module 502 through the output port.

The polarization control module 502 may receive, through the included second input port, the fourth control signal sent by the quantum detection module 501; adjust, based on the fourth control signal, a polarization direction of a currently received quantum signal and a polarization direction of a currently received reference signal; re-send an adjusted quantum signal and an adjusted reference signal to the quantum detection module 501; and when a difference between a reference data measurement value detected by the quantum detection module 501 and the reference data is not greater than the allowable deviation, adjust a polarization direction of a subsequently received quantum signal and a polarization direction of a subsequently received reference signal based on a polarization direction of a finally adjusted quantum signal and a polarization direction of a finally adjusted reference signal.

Optionally, if the reference signal and the quantum signal are sent in a time division multiplexing manner, when receiving the reference signal, the polarization control module 502 may continuously adjust the direction of the reference signal to determine a polarization direction that is of the reference signal and that is obtained when an effect of interference between the reference signal and the local oscillator signal is the best. When the quantum signal is received, the quantum signal is adjusted based on the finally determined polarization direction of the reference signal, to improve an effect of interference between the local oscillator signal and the adjusted quantum signal, and further ensure accuracy of a detection result.

In this embodiment of this application, the quantum key receiving apparatus may receive the local oscillator signal and the quantum signal that are transmitted through two different optical fibers, and obtain the detection result based on the received local oscillator signal and the received quantum signal. In a transmission process, the quantum signal and the local oscillator signal do not need to be isolated from each other through time division multiplexing and polarization multiplexing. Therefore, in the quantum key receiving apparatus, no additional optical path difference needs to be introduced for latency compensation, and the quantum key receiving apparatus can be integrated and miniaturized. Moreover, the quantum key receiving apparatus no longer needs to perform polarization compensation. This reduces additional components and line losses.

In addition, polarization rotation of the local oscillator signal is different from polarization rotation of the quantum signal when they are transmitted in the two optical fibers. Therefore, in the quantum key receiving apparatus, the polarization control module may be disposed on a quantum signal transmission path to adjust the polarization direction of the quantum signal and the polarization direction of the reference signal. In this way, the adjusted quantum signal and the local oscillator signal can have a same polarization direction or have a fixed polarization direction difference, or the adjusted quantum signal can always be stabilized in one polarization direction. This can improve the effect of interference between the quantum signal and the local oscillator signal, and further ensure accuracy of the detection result.

The quantum key receiving apparatus described in the foregoing embodiments mainly uses the polarization control module to avoid polarization rotation inconsistency caused when the quantum signal and the local oscillator signal are transmitted through different optical fibers. Optionally, in a possible implementation, the quantum key receiving apparatus may alternatively avoid polarization rotation inconsistency in another implementation.

For example, referring to FIG. 13, a quantum key receiving apparatus is provided. The apparatus includes a first polarization beam splitter 601, a second polarization beam splitter 602, a first quantum heterodyne detector 603, a second quantum heterodyne detector 604, and a processor 605.

The first polarization beam splitter 601 is configured to: receive a local oscillator signal from a first optical fiber, split the local oscillator signal into a sixth optical signal and a seventh optical signal, send the sixth optical signal to the first quantum heterodyne detector, and send the seventh optical signal to the second quantum heterodyne detector.

It should be noted that the first polarization beam splitter 601 may include an input port, a first output port, and a second output port. The input port of the first polarization beam splitter 601 may be directly connected to the first optical fiber, or the input port of the first polarization beam splitter 601 may be connected to the first optical fiber by using a coupler or a circulator. The first polarization beam splitter 601 may receive, through the input port, the local oscillator signal sent by a quantum key sending apparatus through the first optical fiber. Then, the first polarization beam splitter 601 may split the local oscillator signal into the sixth optical signal and the seventh optical signal, output the sixth optical signal through the first output port, and output the seventh optical signal through the second output port.

The second polarization beam splitter 602 is configured to: receive a quantum signal and a reference signal from a second optical fiber, split the reference signal into an eighth optical signal and a ninth optical signal, split the quantum signal into a tenth optical signal and an eleventh optical signal, send the eighth optical signal and the tenth optical signal to the first quantum heterodyne detector, and send the ninth optical signal and the eleventh optical signal to the second quantum heterodyne detector, where the quantum signal carries a random key.

It should be noted that the second polarization beam splitter 602 may include an input port, a first output port, and a second output port. The input port of the second polarization beam splitter 602 may be directly connected to the second optical fiber, or the input port of the second polarization beam splitter 602 may be connected to the second optical fiber by using a coupler or a circulator. The second polarization beam splitter 602 may receive, through the input port, the quantum signal and the reference signal that are sent by the quantum key sending apparatus through the second optical fiber.

The quantum signal and the reference signal may be sent in a time division multiplexing manner. Therefore, when receiving the reference signal, the second polarization beam splitter 602 may split the reference signal into the eighth optical signal and the ninth optical signal, output the eighth optical signal through the first output port, and output the ninth optical signal through the second output port. When receiving the quantum signal, the second polarization beam splitter 602 may split the quantum signal into the tenth optical signal and the eleventh optical signal, output the tenth optical signal through the first output port, and output the eleventh optical signal through the second output port.

The first quantum heterodyne detector 603 is configured to: receive the sixth optical signal, the eighth optical signal, and the tenth optical signal, detect an interference signal between the sixth optical signal and the eighth optical signal to obtain a regular component of the eighth optical signal, detect an interference signal between the sixth optical signal and the tenth optical signal to obtain a regular component of the tenth optical signal, and send the regular component of the eighth optical signal and the regular component of the tenth optical signal to the processor 605.

When receiving the sixth optical signal and the eighth optical signal, the first quantum heterodyne detector 603 may detect the interference signal between the sixth optical signal and the eighth optical signal to obtain the regular component of the eighth optical signal, and send the regular component of the eighth optical signal to the processor 605. When receiving the tenth optical signal, the first quantum heterodyne detector 603 may detect the interference signal between the tenth optical signal and the sixth optical signal to obtain the regular component of the tenth optical signal, and send the regular component of the tenth optical signal to the processor 605.

The second quantum heterodyne detector 604 is configured to: receive the seventh optical signal, the ninth optical signal, and the eleventh optical signal, detect an interference signal between the seventh optical signal and the ninth optical signal to obtain a regular component of the ninth optical signal, detect an interference signal between the seventh optical signal and the eleventh optical signal to obtain a regular component of the eleventh optical signal, and send the regular component of the ninth optical signal and the regular component of the eleventh optical signal to the processor 605.

When the first quantum heterodyne detector 603 receives the eighth optical signal, the second quantum heterodyne detector 604 may receive the ninth optical signal. In this case, the second quantum heterodyne detector 604 may detect the interference signal between the ninth optical signal and the seventh optical signal to obtain the regular component of the ninth optical signal, and send the regular component of the ninth optical signal to the processor 605. When the first quantum heterodyne detector 603 receives the tenth optical signal, the second quantum heterodyne detector 604 may receive the eleventh optical signal. In this case, the second quantum heterodyne detector 604 may detect the interference signal between the eleventh optical signal and the seventh optical signal to obtain the regular component of the eleventh optical signal, and send the regular component of the eleventh optical signal to the processor 605.

The processor 605 receives the regular component of the eighth optical signal, the regular component of the tenth optical signal, the regular component of the ninth optical signal, and the regular component of the eleventh optical signal, processes the regular component of the eighth optical signal and the regular component of the ninth optical signal to obtain a signal parameter, and processes the regular component of the tenth optical signal and the regular component of the eleventh optical signal based on the signal parameter to obtain an initial key, where the initial key includes key information of the random key.

When the processor 605 receives the regular component that is of the eighth optical signal and that is sent by the first quantum heterodyne detector 603 and the regular component that is of the ninth optical signal and that is sent by the second quantum heterodyne detector, the processor 605 may process the regular component of the eighth optical signal and the regular component of the ninth optical signal to obtain the signal parameter, where the signal parameter may include a first strength transmittance, a second strength transmittance, a first phase, and a second phase. The first intensity transmittance is a strength transmittance of a signal output from the first output port of the second polarization beam splitter 602 after the reference signal enters the second polarization beam splitter 602. The second intensity transmittance is a strength transmittance of a signal output from the first output port of the first polarization beam splitter 601 after the local oscillator signal enters the first polarization beam splitter 601. The first phase is a phase that is of the ninth optical signal when the second quantum heterodyne detector 604 receives the ninth optical signal and that is determined based on a phase of the eighth optical signal when the first quantum heterodyne detector 603 receives the eighth optical signal. The second phase is a phase that is of the sixth optical signal when the first quantum heterodyne detector 603 receives the sixth optical signal and that is determined based on the phase of the eighth optical signal when the first quantum heterodyne detector 603 receives the eighth optical signal.

When receiving the regular component that is of the tenth optical signal and that is sent by the first quantum heterodyne detector 603 and the regular component that is of the eleventh optical signal and that is sent by the second quantum heterodyne detector, the processor 605 may process the regular component of the tenth optical signal and the regular component of the eleventh optical signal based on the determined signal parameter to obtain the initial key, where the initial key includes the key information of the random key.

Optionally, in a possible implementation, the quantum key sending apparatus may send the quantum signal and the reference signal in a frequency division multiplexing manner. In this way, the second polarization beam splitter 602 simultaneously receives the quantum signal and the reference signal, splits the quantum signal and the reference signal into a twelfth optical signal and a thirteenth optical signal, output the twelfth optical signal through the first output port, and output the thirteenth optical signal through the second output port.

When receiving the twelfth optical signal, the first quantum heterodyne detector 603 may detect an interference signal between the twelfth optical signal and the sixth optical signal to obtain a regular component of the twelfth optical signal, and send the regular component of the twelfth optical signal to the processor 605. When receiving the thirteenth optical signal, the second quantum heterodyne detector 604 may detect an interference signal between the thirteenth optical signal and the seventh optical signal to obtain a regular component of the thirteenth optical signal, and send the regular component of the thirteenth optical signal to the processor 605.

After receiving the regular component of the twelfth optical signal and the regular component of the thirteenth optical signal, the processor 605 may extract a first regular component of the reference signal from the regular component of the twelfth optical signal, extract a second regular component of the reference signal from the regular component of the thirteenth optical signal, determine a signal parameter based on the first regular component and the second regular component of the reference signal, and process a regular component of the quantum signal in the twelfth optical signal and a regular component of the quantum signal in the thirteenth optical signal based on the signal parameter to obtain an initial key.

The reference signal and the quantum signal are sent in the frequency division multiplexing manner, and different frequency bands are occupied for the reference signal and the quantum signal. Therefore, based on a frequency band in which the reference signal is located, the processor 605 may separately extract, from the regular component of the twelfth optical signal and the regular component of the thirteenth optical signal, a regular component in the frequency band in which the reference signal is located, to obtain the first regular component and the second regular component of the reference signal.

In this embodiment of this application, the quantum key receiving apparatus may perform beam splitting on the local oscillator signal, the quantum signal, and the reference signal by using the first polarization beam splitter and the second polarization beam splitter, measure the regular component of the reference signal and the regular component of the quantum signal by using the first quantum heterodyne detector and the second quantum heterodyne detector, calculate the signal parameter based on the regular component of the reference signal, and finally process the regular component of the quantum signal based on the signal parameter to obtain the initial key. It can be learned that, in this embodiment of this application, a polarization control module may not need to be disposed in the quantum key receiving apparatus. According to the foregoing method, impact caused by polarization rotation can be eliminated, and accuracy of the obtained key information can be ensured.

The quantum key sending apparatus and the quantum key receiving apparatus that are used for quantum key transmission are mainly described in the foregoing embodiments. In the following, an embodiment of this application provides a quantum key transmission system.

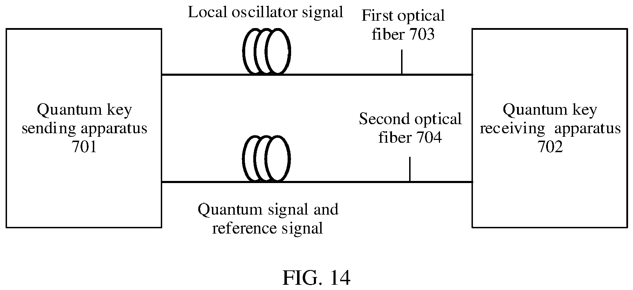

Referring to FIG. 14, a quantum key transmission system is provided. The system may include a quantum key sending apparatus 701, a quantum key receiving apparatus 702, a first optical fiber 703, and a second optical fiber 704. The quantum key sending apparatus 701 and the quantum key receiving apparatus 702 communicate with each other through the first optical fiber 703 and the second optical fiber 704, the first optical fiber 703 is configured to transmit a local oscillator signal, and the second optical fiber 704 is configured to transmit a quantum signal and a reference signal.

It should be noted that the quantum key sending apparatus 701 in the quantum key transmission system may be any one quantum key sending apparatus shown in FIG. 1 to FIG. 8. In this case, the quantum key receiving apparatus 702 may be a quantum key receiving apparatus that does not include a device configured to control a polarization direction. For example, the quantum key receiving apparatus 702 may include a quantum detection module, and does not include a polarization control module.

Optionally, the quantum key receiving apparatus 702 in the quantum key transmission system may be any one quantum key receiving apparatus shown in FIG. 9 to FIG. 13. In this case, the quantum key sending apparatus 701 may not include a polarization controller. For example, the quantum key sending apparatus 701 may include a laser, a beam splitter, and a quantum signal generation module, and does not include the polarization controller. The quantum key sending apparatus 701 may alternatively include a laser, a beam splitter, a quantum signal generation module, and a reference signal generation module, and does not include the polarization controller.

Optionally, in a possible implementation, the quantum key sending apparatus 701 in the quantum key transmission system may be any one quantum key sending apparatus shown in FIG. 1 to FIG. 8, and the quantum key receiving apparatus 702 in the quantum key transmission system may be any one quantum key receiving apparatus shown in FIG. 9 to FIG. 13.

Optionally, considering that two optical fibers are used to transmit coherent optical signals in a classical coherent communications system to implement bidirectional communication, and that the quantum key sending apparatus and the quantum key receiving apparatus in this embodiment of this application also communicate with each other through two optical fibers, the quantum key sending apparatus and the quantum key receiving apparatus in this embodiment of this application may share two optical fibers with the classical coherent communications system to transmit signals.

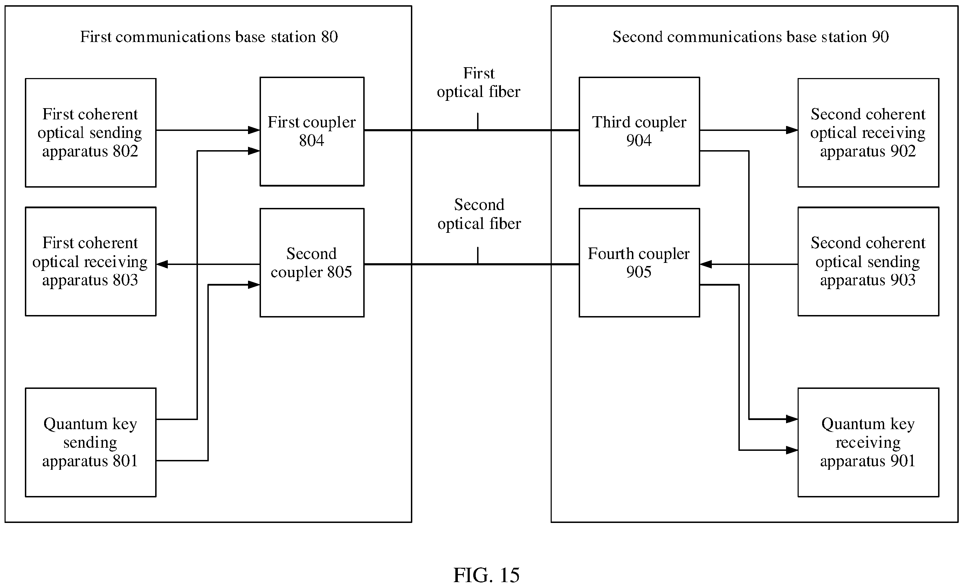

On this basis, referring to FIG. 15, an embodiment of this application provides a quantum key transmission system in which a quantum signal and a coherent optical signal are transmitted in a hybrid manner. The system includes a first communications base station 80 and a second communications base station 90. The first communications base station 80 and the second communications base station 90 implement bidirectional communication through a first optical fiber and a second optical fiber.

The first communications base station 80 includes a quantum key sending apparatus 801, a first coherent optical sending apparatus 802, a first coherent optical receiving apparatus 803, a first coupler 804, and a second coupler 805.

The second communications base station 90 includes a quantum key receiving apparatus 901, a second coherent optical receiving apparatus 902, a second coherent optical sending apparatus 903, a third coupler 904, and a fourth coupler 905.

It should be noted that, for implementations of the quantum key sending apparatus 801 and the quantum key receiving apparatus 901, refer to implementations of the quantum key sending apparatus 701 and the quantum key receiving apparatus 702 shown in FIG. 14.

The first coherent optical sending apparatus 802 is connected to the first optical fiber by using the first coupler, and is configured to send a coherent optical signal to the second coherent optical receiving apparatus 902 through the first optical fiber. The second coherent optical sending apparatus 903 is connected to the second optical fiber by using the fourth coupler, and is configured to send a coherent optical signal to the first coherent optical receiving apparatus 803 through the second optical fiber. In other words, the first coherent optical sending apparatus 802 and the second coherent optical receiving apparatus 902 may be used to transmit a coherent signal from the first communications base station 80 to the second communications base station 90. The second coherent optical sending apparatus 903 and the first coherent optical receiving apparatus 803 may be used to transmit a coherent signal from the second communications base station 90 to the first communications base station 80.

In addition, a local oscillator signal sent by the quantum key sending apparatus 801 and the coherent optical signal sent by the first coherent optical sending apparatus 802 are simultaneously transmitted over the first optical fiber. Therefore, both the quantum key sending apparatus 801 and the first coherent optical sending apparatus 802 may be connected to the first optical fiber by using the first coupler 804. In this way, when receiving the local oscillator signal sent by the quantum key sending apparatus 801 and the coherent optical signal sent by the first coherent optical sending apparatus 802, the first coupler 804 may couple the local oscillator signal and the coherent optical signal, and send a coupled signal through the connected first optical fiber. A wavelength of the local oscillator signal is different from a wavelength of the coherent optical signal.

Correspondingly, the third coupler 904 is connected to the first optical fiber. In this way, the third coupler 904 may receive the signal that is transmitted over the first optical fiber and that is obtained by coupling the coherent optical signal and the local oscillator signal, and decouple the received signal to obtain the local oscillator signal and the coherent optical signal that is sent by the first coherent optical sending apparatus 802. Then, the third coupler 904 may send, to the second coherent optical receiving apparatus 902, the coherent optical signal sent by the first coherent optical sending apparatus 802, and send the local oscillator signal to the quantum key receiving apparatus 901.

It should be further noted that the quantum key sending apparatus 801 is connected to the second optical fiber by using the second coupler 805. In this way, the quantum key sending apparatus 801 may send a quantum signal and a reference signal to the second coupler 805. Then, the second coupler 805 sends the quantum signal and the reference signal to the fourth coupler 905 through the second optical fiber. In addition, the second coupler 805 may be further configured to: receive a coherent optical signal sent by the fourth coupler 905 through the second optical fiber, and send the coherent optical signal to the first coherent optical receiving apparatus 803.

The fourth coupler 905 is configured to: receive the quantum signal and the reference signal from the second optical fiber, and send the quantum signal and the reference signal to the quantum key receiving apparatus 901. In addition, the fourth coupler 905 is further configured to: receive the coherent optical signal sent by the second coherent optical sending apparatus 903, and send the coherent optical signal to the first coherent optical receiving apparatus 803 through the second optical fiber and the second coupler.

The first coupler 804, the second coupler 805, the third coupler 904, and the fourth coupler 905 each may be a wavelength-selective coupler, for example, may be a wavelength division multiplexing (Wavelength Division Multiplexing, WDM) coupler.

Optionally, in a possible implementation, in the quantum key transmission system, the first communications base station may include a plurality of quantum key sending apparatuses. Correspondingly, the second communications base station may include quantum key receiving apparatuses whose quantity is equal to a quantity of quantum key sending apparatuses, and the plurality of quantum key sending apparatuses in the first communications base station one-to-one correspond to the quantum key receiving apparatuses in the second communications base station.

Further, the first communications base station may further include a plurality of quantum key receiving apparatuses. Correspondingly, the second communications base station may include quantum key sending apparatuses that one-to-one correspond to the plurality of quantum key receiving apparatuses, to implement bidirectional transmission of a quantum signal.

In this embodiment of this application, the quantum key sending apparatus and the quantum key receiving apparatus may share two optical fibers with a classical coherent communications system to transmit signals. In this way, a receive end is integrated and miniaturized, additional components and line losses are reduced, and a classical coherent optical signal and a quantum signal are transmitted in a hybrid manner.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

## Claims

1. A quantum key sending apparatus, wherein the apparatus comprises a laser (201), a beam splitter (202), a quantum signal generation module (203), and a polarization control module (204);
the laser (201) is configured to output a first optical signal;
the beam splitter (202) is configured to: receive the first optical signal, split the first optical signal into a second optical signal and a third optical signal, send the second optical signal through a first optical fiber, and send the third optical signal to the quantum signal generation module (203);
the quantum signal generation module (203) is configured to: modulate the third optical signal to obtain a first modulated signal and a second modulated signal, and send the first modulated signal and the second modulated signal to the polarization control module, wherein the first modulated signal carries a to-be-transmitted random key, and the second modulated signal carries to-be-transmitted reference data; and
the polarization control module (204) is configured to: adjust a polarization direction of the first modulated signal and a polarization direction of the second modulated signal, and attenuate light intensity of the first modulated signal and light intensity of the second modulated signal to obtain a quantum signal and a reference signal, wherein the quantum signal and the reference signal are sent through a second optical fiber,
wherein the reference signal carries reference data, and the reference data is negotiated by the quantum key sending apparatus and a quantum key receiving apparatus in advance,
wherein the polarization direction of the reference signal is the same as the polarization direction of the quantum signal.

2. The apparatus according to claim 1, wherein light intensity of the second optical signal is greater than light intensity of the third optical signal.

3. The apparatus according to claim 1 or 2, wherein the apparatus further comprises a receiver (205) and a processor (206);
the receiver (205) is configured to: receive polarization direction control information, and send the polarization direction control information to the processor (206);
the processor (206) is configured to: process the polarization direction control information to obtain a first control signal, and send the first control signal to the polarization control module (204); and
the polarization control module (204) is configured to adjust the polarization direction of the first modulated signal and the polarization direction of the second modulated signal based on the first control signal.

4. The apparatus according to claim 1 or 2, wherein the quantum signal generation module (203) comprises a quantum random number generator (2031), a processing module (2032), and a modulator (2033);
the quantum random number generator (2031) is configured to: generate a random number, and send the random number to the processing module (2032);
the processing module (2032) is configured to: generate the random key based on the random number, and generate a quantum control signal based on the random key; and is further configured to: generate a reference control signal based on the stored reference data, and send the quantum control signal and the reference control signal to the modulator (2033); and
the modulator (2033) is configured to: modulate the third optical signal based on the quantum control signal to obtain the first modulated signal, modulate the third optical signal based on the reference control signal to obtain the second modulated signal, and send the first modulated signal and the second modulated signal to the polarization control module (204).

5. The apparatus according to claim 4, wherein the polarization control module (204) comprises a polarization controller (2041) and an attenuator (2042);
the polarization controller (2041) is configured to: adjust the polarization direction of the first modulated signal and the polarization direction of the second modulated signal, and send an adjusted first modulated signal and an adjusted second modulated signal to the attenuator (2042); and
the attenuator (2042) is configured to: attenuate the adjusted first modulated signal to obtain the quantum signal, and attenuate the adjusted second modulated signal to obtain the reference signal.

6. The apparatus according to claim 4, wherein the polarization control module (204) comprises a polarization controller (2041) and an attenuator (2042);
the attenuator (2042) is configured to: attenuate the first modulated signal and the second modulated signal to obtain an attenuated first modulated signal and an attenuated second modulated signal, and send the attenuated first modulated signal and the attenuated second modulated signal to the polarization controller (2041); and
the polarization controller (2041) is configured to: adjust a polarization direction of the attenuated first modulated signal to obtain the quantum signal, and attenuate a polarization direction of the attenuated second modulated signal to obtain the reference signal.

7. The apparatus according to claim 1 or 2, wherein a wavelength of the second optical signal is different from a wavelength of another optical signal transmitted over the first optical fiber, and a wavelength of the third optical signal is different from a wavelength of another optical signal transmitted over the second optical fiber.

8. The apparatus according to claim 1 or 2, wherein the second optical fiber is further used to transmit a coherent optical signal, and a transmission direction of the coherent optical signal transmitted over the second optical fiber is opposite to a transmission direction of the quantum signal transmitted over the second optical fiber.

9. A quantum key receiving apparatus, wherein the apparatus comprises a quantum detection module (401) and a polarization control module (402);
the polarization control module (402) is configured to: receive a local oscillator signal from a first optical fiber, adjust a polarization direction of the local oscillator signal, and send an adjusted local oscillator signal to the quantum detection module; and
the quantum detection module (401) is configured to: receive a quantum signal and a reference signal from a second optical fiber, and detect the adjusted local oscillator signal, the quantum signal, and the reference signal to obtain detection results, wherein the reference signal carries reference data negotiated by a quantum key sending apparatus and the quantum key receiving apparatus in advance, the quantum signal carries a random key, and the detection results comprise key information of the random key; or
the polarization control module (402) is configured to: receive a quantum signal and a reference signal from a second optical fiber, adjust a polarization direction of the quantum signal and a polarization direction of the reference signal, and send an adjusted quantum signal and an adjusted reference signal to the quantum detection module (401); and
the quantum detection module (401) is configured to: receive a local oscillator signal from a first optical fiber, and detect the local oscillator signal, the adjusted quantum signal, and the adjusted reference signal to obtain detection results
wherein the polarization direction of the reference signal is the same as the polarization direction of the quantum signal, the polarization control module (402) comprises a polarization controller (4021); and
either:
a) the polarization controller (4021) is configured to: receive the local oscillator signal from the first optical fiber, adjust the polarization direction of the local oscillator signal to a first polarization direction, and send the adjusted local oscillator signal to the quantum detection module (401);
the quantum detection module (401) is configured to: receive the adjusted local oscillator signal; receive the quantum signal and the reference signal from the second optical fiber; detect an interference signal between the adjusted local oscillator signal and the reference signal to obtain a reference data measurement value; and if a deviation between the reference data measurement value and stored reference data is not greater than an allowable deviation, detect an interference signal between the quantum signal and the adjusted local oscillator signal, to obtain the detection results; or if a deviation between the reference data measurement value and the stored reference data is greater than an allowable deviation, generate a second control signal based on the reference data measurement value, and send the second control signal to the polarization controller (4021); and
the polarization controller (4021) is further configured to: receive the second control signal, update the polarization direction of the local oscillator signal based on the second control signal, and re-send the adjusted local oscillator signal to the quantum detection module (401); or
b) the polarization controller (4021) is configured to: receive the quantum signal and the reference signal from the second optical fiber, adjust the polarization direction of the quantum signal and the polarization direction of the reference signal to a first polarization direction, and send the adjusted quantum signal and the adjusted reference signal to the quantum detection module (401);
the quantum detection module (401) is configured to: receive the adjusted quantum signal and the adjusted reference signal; receive the local oscillator signal from the first optical fiber; detect an interference signal between the adjusted reference signal and the local oscillator signal to obtain a reference data measurement value; and if a deviation between the reference data measurement value and the stored reference data is not greater than an allowable deviation, detect an interference signal between the adjusted quantum signal and the local oscillator signal, to obtain the detection results; or if a deviation between the reference data measurement value and the stored reference data is greater than an allowable deviation, generate a fourth control signal based on the reference data measurement value, and send the fourth control signal to the polarization controller (4021); and
the polarization controller (4021) is further configured to: receive the fourth control signal, update the polarization direction of the quantum signal and the polarization direction of the reference signal based on the fourth control signal, and re-send the adjusted quantum signal and the adjusted reference signal to the quantum detection module (401).

10. A quantum key receiving apparatus, wherein the apparatus comprises a first polarization beam splitter (601), a second polarization beam splitter (602), a first quantum heterodyne detector (603), a second quantum heterodyne detector (604), and a processor (605);
the first polarization beam splitter (601) is configured to: receive a local oscillator signal from a first optical fiber, split the local oscillator signal into a sixth optical signal and a seventh optical signal, send the sixth optical signal to the first quantum heterodyne detector (603), and send the seventh optical signal to the second quantum heterodyne detector (604);
the second polarization beam splitter (602) is configured to: receive a quantum signal and a reference signal from a second optical fiber, split the reference signal into an eighth optical signal and a ninth optical signal, split the quantum signal into a tenth optical signal and an eleventh optical signal, send the eighth optical signal and the tenth optical signal to the first quantum heterodyne detector (603), and send the ninth optical signal and the eleventh optical signal to the second quantum heterodyne detector (604), wherein the reference signal carries reference data negotiated by a quantum key sending apparatus and the quantum key receiving apparatus in advance and the quantum signal carries a random key;
the first quantum heterodyne detector (603) is configured to: detect an interference signal between the sixth optical signal and the eighth optical signal to obtain a regular component of the eighth optical signal, detect an interference signal between the sixth optical signal and the tenth optical signal to obtain a regular component of the tenth optical signal, and send the regular component of the eighth optical signal and the regular component of the tenth optical signal to the processor (605);
the second quantum heterodyne detector (604) is configured to: detect an interference signal between the seventh optical signal and the ninth optical signal to obtain a regular component of the ninth optical signal, detect an interference signal between the seventh optical signal and the eleventh optical signal to obtain a regular component of the eleventh optical signal, and send the regular component of the ninth optical signal and the regular component of the eleventh optical signal to the processor (605); and
the processor (605) is configured to: process the regular component of the eighth optical signal and the regular component of the ninth optical signal to obtain a signal parameter, and process the regular component of the tenth optical signal and the regular component of the eleventh optical signal based on the signal parameter to obtain an initial key, wherein the initial key comprises key information of the random key.

11. A quantum key transmission system, wherein the quantum key transmission system comprises a quantum key sending apparatus and a quantum key receiving apparatus;
the quantum key sending apparatus is the apparatus according to any one of claims 1 to 8; and
the quantum key receiving apparatus is the apparatus according to claim 9.

## Patentansprüche

1. Quantenschlüsselsendevorrichtung, wobei die Vorrichtung einen Laser (201), einen Strahlteiler (202), ein Quantensignalerzeugungsmodul (203) und ein Polarisationssteuermodul (204) umfasst;
wobei der Laser (201) dazu konfiguriert ist, ein erstes optisches Signal auszugeben;
wobei der Strahlteiler (202) dazu konfiguriert ist: das erste optische Signal zu empfangen, das erste optische Signal in ein zweites optisches Signal und ein drittes optisches Signal zu trennen, das zweite optische Signal durch eine erste optische Faser zu senden und das dritte optische Signal an das Quantensignalerzeugungsmodul (203) zu senden;
wobei das Quantensignalerzeugungsmodul (203) dazu konfiguriert ist: das dritte optische Signal zu modulieren, um ein erstes moduliertes Signal und ein zweites moduliertes Signal zu erhalten, und das erste modulierte Signal und das zweite modulierte Signal an das Polarisationssteuermodul zu senden, wobei das erste modulierte Signal einen zu übertragenden Zufallsschlüssel trägt und das zweite modulierte Signal zu übertragende Referenzdaten trägt; und
wobei das Polarisationssteuermodul (204) dazu konfiguriert ist: eine Polarisationsrichtung des ersten modulierten Signals und eine Polarisationsrichtung des zweiten modulierten Signals einzustellen und Lichtintensität des ersten modulierten Signals und Lichtintensität des zweiten modulierten Signals zu dämpfen, um ein Quantensignal und ein Referenzsignal zu erhalten, wobei das Quantensignal und das Referenzsignal durch eine zweite optische Faser gesendet werden,
wobei das Referenzsignal Referenzdaten trägt und die Referenzdaten von der Quantenschlüsselsendevorrichtung und einer Quantenschlüsselempfangsvorrichtung im Voraus vereinbart werden,
wobei die Polarisationsrichtung des Referenzsignals gleich der Polarisationsrichtung des Quantensignals ist.

2. Vorrichtung nach Anspruch 1, wobei die Lichtintensität des zweiten optischen Signals größer ist als die Lichtintensität des dritten optischen Signals.

3. Vorrichtung nach Anspruch 1 oder 2, wobei die Vorrichtung ferner einen Empfänger (205) und einen Prozessor (206) umfasst;
wobei der Empfänger (205) dazu konfiguriert ist:
Polarisationsrichtungssteuerinformation zu empfangen und die Polarisationsrichtungssteuerinformation an den Prozessor (206) zu senden;
wobei der Prozessor (206) dazu konfiguriert ist: die Polarisationsrichtungssteuerinformation zu verarbeiten, um ein erstes Steuersignal zu erhalten, und das erste Steuersignal an das Polarisationssteuermodul (204) zu senden; und
wobei das Polarisationssteuermodul (204) dazu konfiguriert ist, die Polarisationsrichtung des ersten modulierten Signals und die Polarisationsrichtung des zweiten modulierten Signals auf Grundlage des ersten Steuersignals einzustellen.

4. Vorrichtung nach Anspruch 1 oder 2, wobei das Quantensignalerzeugungsmodul (203) einen Quantenzufallszahlenerzeuger (2031), ein Verarbeitungsmodul (2032) und einen Modulator (2033) umfasst;
wobei der Quantenzufallszahlenerzeuger (2031) dazu konfiguriert ist: eine Zufallszahl zu erzeugen und die Zufallszahl an das Verarbeitungsmodul (2032) zu senden;
wobei das Verarbeitungsmodul (2032) dazu konfiguriert ist: den Zufallsschlüssel auf Grundlage der Zufallszahl zu erzeugen und ein Quantensteuersignal auf Grundlage des Zufallsschlüssels zu erzeugen; und ferner dazu konfiguriert ist: ein Referenzsteuersignal auf Grundlage der gespeicherten Referenzdaten zu erzeugen und das Quantensteuersignal und das Referenzsteuersignal an den Modulator (2033) zu senden; und
wobei der Modulator (2033) dazu konfiguriert ist: das dritte optische Signal auf Grundlage des Quantensteuersignals zu modulieren, um das erste modulierte Signal zu erhalten, das dritte optische Signal auf Grundlage des Referenzsteuersignals zu modulieren, um das zweite modulierte Signal zu erhalten, und das erste modulierte Signal und das zweite modulierte Signal an das Polarisationssteuermodul (204) zu senden.

5. Vorrichtung nach Anspruch 4, wobei das Polarisationssteuermodul (204) eine Polarisationssteuerung (2041) und einen Dämpfer (2042) umfasst;
wobei die Polarisationssteuerung (2041) dazu konfiguriert ist:
die Polarisationsrichtung des ersten modulierten Signals und die Polarisationsrichtung des zweiten modulierten Signals einzustellen und ein eingestelltes erstes moduliertes Signal und ein eingestelltes zweites moduliertes Signal an den Dämpfer (2042) zu senden; und
wobei der Dämpfer (2042) dazu konfiguriert ist: das eingestellte erste modulierte Signal zu dämpfen, um das Quantensignal zu erhalten, und das eingestellte zweite modulierte Signal zu dämpfen, um das Referenzsignal zu erhalten.

6. Vorrichtung nach Anspruch 4, wobei das Polarisationssteuermodul (204) eine Polarisationssteuerung (2041) und einen Dämpfer (2042) umfasst;
wobei der Dämpfer (2042) dazu konfiguriert ist: das erste modulierte Signal und das zweite modulierte Signal zu dämpfen, um ein gedämpftes erstes moduliertes Signal und ein gedämpftes zweites moduliertes Signal zu erhalten, und das gedämpfte erste modulierte Signal und das gedämpfte zweite modulierte Signal an die Polarisationssteuerung (2041) zu senden; und
wobei die Polarisationssteuerung (2041) dazu konfiguriert ist: eine Polarisationsrichtung des gedämpften ersten modulierten Signals einzustellen, um das Quantensignal zu erhalten, und eine Polarisationsrichtung des gedämpften zweiten modulierten Signals zu dämpfen, um das Referenzsignal zu erhalten.

7. Vorrichtung nach Anspruch 1 oder 2, wobei eine Wellenlänge des zweiten optischen Signals sich von einer Wellenlänge eines anderen optischen Signals, das über die erste optische Faser übertragen wird, unterscheidet und eine Wellenlänge des dritten optischen Signals sich von einer Wellenlänge eines anderen optischen Signals, das über die zweite optische Faser übertragen wird, unterscheidet.

8. Vorrichtung nach Anspruch 1 oder 2, wobei die zweite optische Faser ferner dazu verwendet wird, ein kohärentes optisches Signals zu übertragen, und eine Übertragungsrichtung des über die zweite optische Faser übertragenen kohärenten optischen Signals entgegengesetzt zu einer Übertragungsrichtung des über die zweite optische Faser übertragenen Quantensignals ist.

9. Quantenschlüsselempfangsvorrichtung, wobei die Vorrichtung ein Quantendetektierungsmodul (401) und ein Polarisationssteuermodul (402) umfasst;
wobei das Polarisationssteuermodul (402) dazu konfiguriert ist: ein lokales Oszillatorsignal von einer ersten optischen Faser zu empfangen, eine Polarisationsrichtung des lokalen Oszillatorsignals einzustellen und ein eingestelltes lokales Oszillatorsignal an das Quantendetektierungsmodul zu senden; und
wobei das Quantendetektierungsmodul (401) dazu konfiguriert ist: ein Quantensignal und ein Referenzsignal von einer zweiten optischen Faser zu empfangen und das eingestellte lokale Oszillatorsignal, das Quantensignal und das Referenzsignal zu detektieren, um Detektierungsergebnisse zu erhalten, wobei das Referenzsignal Referenzdaten trägt, die von einer Quantenschlüsselsendevorrichtung und einer Quantenschlüsselempfangsvorrichtung im Voraus vereinbart werden, wobei das Quantensignal einen Zufallsschlüssel trägt und die Detektierungsergebnisse Schlüsselinformationen des Zufallsschlüssels umfassen; oder
wobei das Polarisationssteuermodul (402) dazu konfiguriert ist: ein Quantensignal und ein Referenzsignal von einer zweiten optischen Faser zu empfangen, eine Polarisationsrichtung des Quantensignals und eine Polarisationsrichtung des Referenzsignals einzustellen und ein eingestelltes Quantensignal und ein eingestelltes Referenzsignal an das Quantendetektierungsmodul (401) zu senden; und
wobei das Quantendetektierungsmodul (401) dazu konfiguriert ist: ein lokales Oszillatorsignal von einer ersten optischen Faser zu empfangen und das lokale Oszillatorsignal, das eingestellte Quantensignal und das eingestellte Referenzsignal zu detektieren, um Detektierungsergebnisse zu erhalten
wobei die Polarisationsrichtung des Referenzsignals gleich der Polarisationsrichtung des Quantensignals ist, wobei das Polarisationssteuermodul (402) eine Polarisationssteuerung (4021) umfasst; und
entweder:
a) wobei die Polarisationssteuerung (4021) dazu konfiguriert ist: das lokale Oszillatorsignal von der ersten optischen Faser zu empfangen, die Polarisationsrichtung des lokalen Oszillatorsignals auf eine erste Polarisationsrichtung einzustellen und das eingestellte lokale Oszillatorsignal an das Quantendetektierungsmodul (401) zu senden;
wobei das Quantendetektierungsmodul (401) dazu konfiguriert ist: das eingestellte lokale Oszillatorsignal zu empfangen; das Quantensignal und das Referenzsignal von der zweiten optischen Faser zu empfangen; ein Interferenzsignal zwischen dem eingestellten lokalen Oszillatorsignal und dem Referenzsignal zu detektieren, um einen Referenzdatenmesswert zu erhalten; und, wenn eine Abweichung zwischen dem Referenzdatenmesswert und gespeicherten Referenzdaten nicht größer als eine zulässige Abweichung ist, ein Interferenzsignal zwischen dem Quantensignal und dem eingestellten lokalen Oszillatorsignal zu detektieren, um die Detektierungsergebnisse zu erhalten; oder, wenn eine Abweichung zwischen dem Referenzdatenmesswert und den gespeicherten Referenzdaten größer als eine zulässige Abweichung ist, ein zweites Steuersignal auf Grundlage des Referenzdatenmesswerts zu erzeugen und das zweite Steuersignal an die Polarisationssteuerung (4021) zu senden; und
wobei die Polarisationssteuerung (4021) ferner dazu konfiguriert ist: das zweite Steuersignal zu empfangen, die Polarisationsrichtung des lokalen Oszillatorsignals auf Grundlage des zweiten Steuersignals zu aktualisieren und das eingestellte lokale Oszillatorsignal erneut an das Quantendetektierungsmodul (401) zu senden; oder
b) wobei die Polarisationssteuerung (4021) dazu konfiguriert ist: das Quantensignal und das Referenzsignal von der zweiten optischen Faser zu empfangen, die Polarisationsrichtung des Quantensignals und die Polarisationsrichtung des Referenzsignals auf eine erste Polarisationsrichtung einzustellen und das eingestellte Quantensignal und das eingestellte Referenzsignal an das Quantendetektierungsmodul (401) zu senden;
wobei das Quantendetektierungsmodul (401) dazu konfiguriert ist: das eingestellte Quantensignal und das eingestellte Referenzsignal zu empfangen; das lokale Oszillatorsignal von der ersten optischen Faser zu empfangen; ein Interferenzsignal zwischen dem eingestellten Referenzsignal und dem lokalen Oszillatorsignal zu detektieren, um einen Referenzdatenmesswert zu erhalten; und, wenn eine Abweichung zwischen dem Referenzdatenmesswert und den gespeicherten Referenzdaten nicht größer als eine zulässige Abweichung ist, ein Interferenzsignal zwischen dem eingestellten Quantensignal und dem lokalen Oszillatorsignal zu detektieren, um die Detektierungsergebnisse zu erhalten; oder, wenn eine Abweichung zwischen dem Referenzdatenmesswert und den gespeicherten Referenzdaten größer als eine zulässige Abweichung ist, ein viertes Steuersignal auf Grundlage des Referenzdatenmesswerts zu erzeugen und das vierte Steuersignal an die Polarisationssteuerung (4021) zu senden; und
wobei die Polarisationsteuerung (4021) ferner dazu konfiguriert ist: das vierte Steuersignal zu empfangen, die Polarisationsrichtung des Quantensignals und die Polarisationsrichtung des Referenzsignals auf Grundlage des vierten Steuersignals zu aktualisieren und das eingestellte Quantensignal und das eingestellte Referenzsignal erneut an das Quantendetektierungsmodul (401) zu senden.

10. Quantenschlüsselempfangsvorrichtung, wobei die Vorrichtung einen ersten Polarisationsstrahlteiler (601), einen zweiten Polarisationsstrahlteiler (602), einen ersten Quantenheterodyndetektor (603), einen zweiten Quantenheterodyndetektor (604) und einen Prozessor (605) umfasst;
wobei der erste Polarisationsstrahlteiler (601) dazu konfiguriert ist: ein lokales Oszillatorsignal von einer ersten optischen Faser zu empfangen, das lokale Oszillatorsignal in ein sechstes optisches Signal und ein siebtes optisches Signal zu teilen, das sechste optische Signal an den ersten Quantenheterodyndetektor (603) zu senden und das siebte optische Signal an den zweiten Quantenheterodyndetektor (604) zu senden;
wobei der zweite Polarisationsstrahlteiler (602) dazu konfiguriert ist: ein Quantensignal und ein Referenzsignal von einer zweiten optischen Faser zu empfangen, das Referenzsignal in ein achtes optisches Signal und ein neuntes optisches Signal zu teilen, das Quantensignal in ein zehntes optisches Signal und ein elftes optisches Signal zu teilen, das achte optische Signal und das zehnte optische Signal an den ersten Quantenheterodyndetektor (603) zu senden und das neunte optische Signal und das elfte optische Signal an den zweiten Quantenheterodyndetektor (604) zu senden, wobei das Referenzsignal Referenzdaten trägt, die von einer Quantenschlüsselsendevorrichtung und der Quantenschlüsselempfangsvorrichtung im Voraus vereinbart werden und wobei das Quantensignal einen Zufallsschlüssel trägt;
wobei der erste Quantenheterodyndetektor (603) dazu konfiguriert ist: ein Interferenzsignal zwischen dem sechsten optischen Signal und dem achten optischen Signal zu detektieren, um eine reguläre Komponente des achten optischen Signals zu erhalten, ein Interferenzsignal zwischen dem sechsten optischen Signal und dem zehnten optischen Signal zu detektieren, um eine reguläre Komponente des zehnten optischen Signals zu erhalten, und die reguläre Komponente des achten optischen Signals und die reguläre Komponente des zehnten optischen Signals an den Prozessor (605) zu senden;
wobei der zweite Quantenheterodyndetektor (604) dazu konfiguriert ist: ein Interferenzsignal zwischen dem siebten optischen Signal und dem neunten optischen Signal zu detektieren, um eine reguläre Komponente des neunten optischen Signals zu erhalten, ein Interferenzsignal zwischen dem siebten optischen Signal und dem elften optischen Signal zu detektieren, um eine reguläre Komponente des elften optischen Signals zu erhalten, und die reguläre Komponente des neunten optischen Signals und die reguläre Komponente des elften optischen Signals an den Prozessor (605) zu senden; und
wobei der Prozessor (605) dazu konfiguriert ist: die reguläre Komponente des achten optischen Signals und die reguläre Komponente des neunten optischen Signals zu verarbeiten, um einen Signalparameter zu erhalten, und die reguläre Komponente des zehnten optischen Signals und die reguläre Komponente des elften optischen Signals auf Grundlage des Signalparameters zu verarbeiten, um einen anfänglichen Schlüssel zu erhalten, wobei der anfängliche Schlüssel Schlüsselinformationen des zufälligen Schlüssels umfasst.

11. Quantenschlüsselübertragungssystem, wobei das Quantenschlüsselübertragungssystem eine Quantenschlüsselsendevorrichtung und eine Quantenschlüsselempfangsvorrichtung umfasst;
wobei die Quantenschlüsselsendevorrichtung die Vorrichtung nach einem der Ansprüche 1 bis 8 ist; und
wobei die Quantenschlüsselempfangsvorrichtung ist die Vorrichtung nach Anspruch 9 ist.

## Revendications

1. Appareil d'envoi de clé quantique, dans lequel l'appareil comprend un laser (201), un diviseur de faisceau (202), un module de génération de signal quantique (203) et un module de commande de polarisation (204) ;
le laser (201) est configuré pour délivrer un premier signal optique ;
le diviseur de faisceau (202) est configuré pour : recevoir le premier signal optique, diviser le premier signal optique en un deuxième signal optique et un troisième signal optique, envoyer le deuxième signal optique à travers une première fibre optique, et envoyer le troisième signal optique au module de génération de signal quantique (203) ;
le module de génération de signal quantique (203) est configuré pour : moduler le troisième signal optique pour obtenir un premier signal modulé et un second signal modulé, et envoyer le premier signal modulé et le second signal modulé au module de commande de polarisation, le premier signal modulé portant une clé aléatoire à transmettre, et le second signal modulé portant des données de référence à transmettre ; et
le module de commande de polarisation (204) est configuré pour : ajuster une direction de polarisation du premier signal modulé et une direction de polarisation du second signal modulé, et atténuer l'intensité lumineuse du premier signal modulé et l'intensité lumineuse du second signal modulé pour obtenir un signal quantique et un signal de référence, dans lequel le signal quantique et le signal de référence sont envoyés à travers une seconde fibre optique,
dans lequel le signal de référence transporte des données de référence, et les données de référence sont préalablement négociées par l'appareil émetteur de clé quantique et un appareil récepteur de clé quantique,
dans lequel la direction de polarisation du signal de référence est la même que la direction de polarisation du signal quantique.

2. Appareil selon la revendication 1, dans lequel l'intensité lumineuse du deuxième signal optique est supérieure à l'intensité lumineuse du troisième signal optique.

3. Appareil selon la revendication 1 ou 2, dans lequel l'appareil comprend en outre un récepteur (205) et un processeur (206) ;
le récepteur (205) est configuré pour : recevoir des informations de commande de direction de polarisation, et envoyer les informations de commande de direction de polarisation au processeur (206) ;
le processeur (206) est configuré pour : traiter les informations de commande de direction de polarisation pour obtenir un premier signal de commande, et envoyer le premier signal de commande au module de commande de polarisation (204) ; et
le module de commande de polarisation (204) est configuré pour ajuster la direction de polarisation du premier signal modulé et la direction de polarisation du second signal modulé sur la base du premier signal de commande.

4. Appareil selon la revendication 1 ou 2, dans lequel le module de génération de signal quantique (203) comprend un générateur de nombres aléatoires quantiques (2031), un module de traitement (2032) et un modulateur (2033) ;
le générateur de nombres aléatoires quantiques (2031) est configuré pour : générer un nombre aléatoire, et envoyer le nombre aléatoire au module de traitement (2032) ;
le module de traitement (2032) est configuré pour : générer la clé aléatoire sur la base du nombre aléatoire, et générer un signal de commande quantique sur la base de la clé aléatoire ; et est en outre configuré pour : générer un signal de commande de référence sur la base des données de référence stockées, et envoyer le signal de commande quantique et le signal de commande de référence au modulateur (2033) ; et
le modulateur (2033) est configuré pour : moduler le troisième signal optique sur la base du signal de commande quantique pour obtenir le premier signal modulé, moduler le troisième signal optique sur la base du signal de commande de référence pour obtenir le second signal modulé, et envoyer le premier signal modulé et le second signal modulé au module de commande de polarisation (204).

5. Appareil selon la revendication 4, dans lequel le module de commande de polarisation (204) comprend un dispositif de commande de polarisation (2041) et un atténuateur (2042) ;
le dispositif de commande de polarisation (2041) est configuré pour : ajuster la direction de polarisation du premier signal modulé et la direction de polarisation du second signal modulé, et envoyer un premier signal modulé ajusté et un second signal modulé ajusté à l'atténuateur (2042) ; et
l'atténuateur (2042) est configuré pour : atténuer le premier signal modulé ajusté pour obtenir le signal quantique, et atténuer le second signal modulé ajusté pour obtenir le signal de référence.

6. Appareil selon la revendication 4, dans lequel le module de commande de polarisation (204) comprend un dispositif de commande de polarisation (2041) et un atténuateur (2042) ;
l'atténuateur (2042) est configuré pour : atténuer le premier signal modulé et le second signal modulé pour obtenir un premier signal modulé atténué et un second signal modulé atténué, et envoyer le premier signal modulé atténué et le second signal modulé atténué au dispositif de commande de polarisation (2041) ; et
le dispositif de commande de polarisation (2041) est configuré pour : ajuster une direction de polarisation du premier signal modulé atténué pour obtenir le signal quantique, et atténuer une direction de polarisation du second signal modulé atténué pour obtenir le signal de référence.

7. Appareil selon la revendication 1 ou 2, dans lequel la longueur d'onde du deuxième signal optique est différente de la longueur d'onde d'un autre signal optique transmis sur la première fibre optique, et la longueur d'onde du troisième signal optique est différente de la longueur d'onde d'un autre signal optique transmis sur la seconde fibre optique.

8. Appareil selon la revendication 1 ou 2, dans lequel la seconde fibre optique est utilisée pour transmettre un signal optique cohérent, et la direction de transmission du signal optique cohérent transmis sur la seconde fibre optique est opposé à la direction de transmission du signal quantique transmis sur la seconde fibre optique.

9. Appareil de réception de clé quantique, dans lequel l'appareil comprend un module de détection quantique (401) et un module de commande de polarisation (402) ;
le module de commande de polarisation (402) est configuré pour : recevoir un signal d'oscillateur local provenant d'une première fibre optique, ajuster une direction de polarisation du signal d'oscillateur local, et envoyer un signal d'oscillateur local ajusté au module de détection quantique ;
et
le module de détection quantique (401) est configuré pour : recevoir un signal quantique et un signal de référence provenant d'une seconde fibre optique, et détecter le signal d'oscillateur local ajusté, le signal quantique et le signal de référence pour obtenir des résultats de détection, dans lequel le signal de référence transporte des données de référence préalablement négociées par un appareil d'émission de clé quantique et l'appareil de réception de clé quantique, le signal quantique transporte une clé aléatoire, et les résultats de détection comprennent des informations de clé de la clé aléatoire ; ou
le module de commande de polarisation (402) est configuré pour : recevoir un signal quantique et un signal de référence provenant d'une seconde fibre optique, ajuster une direction de polarisation du signal quantique et une direction de polarisation du signal de référence, et envoyer un signal quantique ajusté et un signal de référence ajusté au module de détection quantique (401) ; et
le module de détection quantique (401) est configuré pour : recevoir un signal d'oscillateur local provenant d'une première fibre optique, et détecter le signal d'oscillateur local, le signal quantique ajusté et le signal de référence ajusté pour obtenir des résultats de détection
dans lequel la direction de polarisation du signal de référence est la même que la direction de polarisation du signal quantique, le module de commande de polarisation (402) comprend un dispositif de commande de polarisation (4021) ; et soit :
a) le dispositif de commande de polarisation (4021) est configuré pour : recevoir le signal d'oscillateur local provenant de la première fibre optique, ajuster la direction de polarisation du signal d'oscillateur local à une première direction de polarisation, et envoyer le signal d'oscillateur local ajusté au module de détection quantique (401) ;
le module de détection quantique (401) est configuré pour : recevoir le signal d'oscillateur local ajusté ; recevoir le signal quantique et le signal de référence à partir de la seconde fibre optique ; détecter un signal d'interférence entre le signal d'oscillateur local ajusté et le signal de référence pour obtenir une valeur de mesure de données de référence ; et si un écart entre la valeur de mesure de données de référence et les données de référence stockées n'est pas supérieur à un écart admissible, détecter un signal d'interférence entre le signal quantique et le signal d'oscillateur local ajusté, pour obtenir les résultats de détection ; ou si un écart entre la valeur de mesure de données de référence et les données de référence stockées est supérieur à un écart admissible, générer un deuxième signal de commande sur la base des valeurs de mesure de données de référence et envoyer le deuxième signal de commande au dispositif de commande de polarisation (4021) ; et
le dispositif de commande de polarisation (4021) est en outre configuré pour : recevoir le deuxième signal de commande, mettre à jour la direction de polarisation du signal d'oscillateur local sur la base du deuxième signal de commande, et renvoyer le signal d'oscillateur local ajusté au module de détection quantique (401) ; soit
b) le dispositif de commande de polarisation (4021) est configuré pour : recevoir le signal quantique et le signal de référence provenant de la seconde fibre optique, ajuster la direction de polarisation du signal quantique et la direction de polarisation du signal de référence à une première direction de polarisation, et envoyer le signal quantique ajusté et le signal de référence ajusté au module de détection quantique (401) ;
le module de détection quantique (401) est configuré pour : recevoir le signal quantique ajusté et le signal de référence ajusté ; recevoir le signal d'oscillateur local à partir de la première fibre optique ; détecter un signal d'interférence entre le signal de référence ajusté et le signal d'oscillateur local pour obtenir une valeur de mesure de données de référence ; et si un écart entre la valeur de mesure de données de référence et les données de référence stockées n'est pas supérieur à un écart admissible, détecter un signal d'interférence entre le signal quantique ajusté et le signal d'oscillateur local, pour obtenir les résultats de détection ;
ou si un écart entre la valeur de mesure de données de référence et les données de référence stockées est supérieur à un écart admissible, générer un quatrième signal de commande sur la base des valeurs de mesure de données de référence et envoyer le quatrième signal de commande au dispositif de commande de polarisation (4021) ; et
le dispositif de commande de polarisation (4021) est en outre configuré pour : recevoir le quatrième signal de commande, mettre à jour la direction de polarisation du signal quantique et la direction de polarisation du signal de référence sur la base du quatrième signal de commande, et renvoyer le signal quantique ajusté et le signal de référence ajusté au module de détection quantique (401).

10. Appareil de réception de clé quantique, dans lequel l'appareil comprend un premier diviseur de faisceau de polarisation (601), un second diviseur de faisceau de polarisation (602), un premier détecteur hétérodyne quantique (603), un second détecteur hétérodyne quantique (604), et un processeur (605) ;
le premier diviseur de faisceau de polarisation (601) est configuré pour : recevoir un signal d'oscillateur local provenant d'une première fibre optique, diviser le signal d'oscillateur local en un sixième signal optique et un septième signal optique, envoyer le sixième signal optique au premier détecteur hétérodyne quantique (603), et envoyer le septième signal optique au second détecteur hétérodyne quantique (604) ;
le second diviseur de faisceau de polarisation (602) est configuré pour : recevoir un signal quantique et un signal de référence provenant d'une seconde fibre optique, diviser le signal de référence en un huitième signal optique et un neuvième signal optique, diviser le signal quantique en un dixième signal optique et un onzième signal optique, envoyer le huitième signal optique et le dixième signal optique au premier détecteur hétérodyne quantique (603), et envoyer le neuvième signal optique et le onzième signal optique au second détecteur hétérodyne quantique (604), dans lequel le signal de référence transporte des données de référence préalablement négociées par un appareil d'envoi de clé quantique et l'appareil de réception de clé et le signal quantique transporte une clé aléatoire ;
le premier détecteur hétérodyne quantique (603) est configuré pour : détecter un signal d'interférence entre le sixième signal optique et le huitième signal optique pour obtenir une composante régulière du huitième signal optique, détecter un signal d'interférence entre le sixième signal optique et le dixième signal optique pour obtenir une composante régulière du dixième signal optique, et envoyer la composante régulière du huitième signal optique et la composante régulière du dixième signal optique au processeur (605) ;
le second détecteur hétérodyne quantique (604) est configuré pour : détecter un signal d'interférence entre le septième signal optique et le neuvième signal optique pour obtenir une composante régulière du neuvième signal optique, détecter un signal d'interférence entre le septième signal optique et le onzième signal optique pour obtenir une composante régulière du onzième signal optique, et envoyer la composante régulière du neuvième signal optique et la composante régulière du onzième signal optique au processeur (605) ; et
le processeur (605) est configuré pour : traiter la composante régulière du huitième signal optique et la composante régulière du neuvième signal optique pour obtenir un paramètre de signal, et traiter la composante régulière du dixième signal optique et la composante régulière du onzième signal optique sur la base du paramètre de signal pour obtenir une clé initiale, dans lequel la clé initiale comprend des informations de clé de la clé aléatoire.

11. Système de transmission de clé quantique, dans lequel le système de transmission de clé quantique comprend un appareil d'envoi de clé quantique et un appareil de réception de clé quantique ;
l'appareil d'envoi de clé quantique est l'appareil selon l'une quelconque des revendications 1 à 8 ; et
l'appareil de réception de clé quantique est l'appareil selon la revendication 9.
